(19) Europäisches Patentamt
European Patent Office
Office européen des brevets

(11) **EP 3 241 450 B1**

(12) **EUROPÄISCHE PATENTSCHRIFT**

(45) Veröffentlichungstag und Bekanntmachung des Hinweises auf die Patenterteilung:
**12.06.2019   Patentblatt 2019/24**

(21) Anmeldenummer: **17169265.0**

(22) Anmeldetag: **03.05.2017**

(51) Int Cl.:
**A23L 3/36** (2006.01)          **A21D 6/00** (2006.01)
**A21D 15/02** (2006.01)        **F26B 5/04** (2006.01)
**F25D 31/00** (2006.01)        **A23L 3/015** (2006.01)

(54) **VAKUUMKÜHLUNG FÜR LEBENSMITTEL**

VACUUM COOLING FOR FOOD

REFROIDISSEMENT SOUS VIDE POUR ALIMENTS

(84) Benannte Vertragsstaaten:
**AL AT BE BG CY CZ DE DK EE ES FI FR GB GR HR HU IE IS IT LT LU LV MC MK MT NL NO PL PT RO RS SE SI SK SM TR**

(30) Priorität: **03.05.2016   CH 582202016**

(43) Veröffentlichungstag der Anmeldung:
**08.11.2017   Patentblatt 2017/45**

(60) Teilanmeldung:
**19171654.7**

(73) Patentinhaber: **Grüebler, Walter**
**6343 Risch (CH)**

(72) Erfinder: **SPRENGER, Edwin Bruno**
**6319 Allenwinden (CH)**

(74) Vertreter: **Keller & Partner Patentanwälte AG**
**Eigerstrasse 2**
**Postfach**
**3000 Bern 14 (CH)**

(56) Entgegenhaltungen:
**EP-A1- 2 832 242       WO-A1-2012/082060**
**JP-A- H0 758 092       JP-A- 2015 087 078**
**US-A- 4 331 690**

• **CHENG ET AL: "Multi-stage vacuum cooling process of cabbage", JOURNAL OF FOOD ENGINEE, BARKING, ESSEX, GB, Bd. 79, Nr. 1, März 2007 (2007-03), Seiten 37-46, XP005664678, ISSN: 0260-8774, DOI: 10.1016/J.JFOODENG.2006.01.027**

EP 3 241 450 B1

**Beschreibung**

**Technisches Gebiet**

Die Erfindung betrifft ein Verfahren zur Vakuumkühlung von Lebensmitteln. In diesem Verfahren werden Lebensmittel in einer Vakuumkammer platziert. Mindestens ein Wert für atmosphärische Bedingungen in einem externen Bereich, nämlich der Wert für eine Luftfeuchtigkeit und/oder einen Taupunkt, wird angegeben. Schliesslich werden die Gase in der Vakuumkammer mithilfe einer Abpumpvorrichtung, in Abhängigkeit der oder des Wertes für eine Luftfeuchtigkeit und/oder einen Taupunkt des externen Bereichs, kontrolliert abgepumpt. Des Weiteren betrifft die Erfindung eine Vorrichtung, mit der dieses Verfahren durchgeführt werden kann.

**Stand der Technik**

Vakuumkühlung von Lebensmitteln, und insbesondere Backwaren, ist ein an sich bekanntes Verfahren. Dabei wird die latente Wärme des in den Lebensmitteln, beziehungsweise Backwaren vorkommenden Wassers zur Kühlung genutzt. Indem der Umgebungsluftdruck der Lebensmittel beziehungsweise Backwaren gezielt gesenkt wird, sublimiert die Feuchtigkeit an und, da Lebensmittel und insbesondere Backwaren im Allgemeinen keine gasdichten und starren Oberflächen haben, auch in den Lebensmitteln. Somit wird eine rasche und gleichmässige Kühlung vieler Lebensmittel und insbesondere vieler Backwaren ermöglicht.

Allerdings ist neben einer Kühlung auch die Erhaltung der Qualität der Lebensmittel wichtig.

Die EP 2 832 242 A1 (Ulrich Giger) befasst sich zum Beispiel mit einem Verfahren zur Regelung des Druckes in einer Vakuumkühlvorrichtung für Lebensmittel, insbesondere für Backwaren. Da der Verlauf des Kühlverfahrens die Qualität der vakuumgekühlten Lebensmittel beeinflusst, wird der Druck derart geregelt, dass die Druckkurve an die Rezeptur der jeweiligen Lebensmittel angepasst ist.

Die CH 706933 A1 (Aston Foods) beschreibt eine Vakuumkühlanlage, in der ebenfalls aus dem Ofen kommende Backwaren abgekühlt werden sollen. Die Vakuumvorrichtung umfasst mehrere gleichartige und parallel angeordnete Vakuumkammern, die mit einer gemeinsamen Pumpenanordnung in Verbindung stehen. Obwohl in dieser Anmeldung der Druck geregelt werden kann, offenbart dieses Dokument nicht, wovon und in Abhängigkeit von was diese Regelung geschehen soll.

Auch die WO 2012/082060 A1 (Revent International) beschreibt eine Vakuumkühlung für zum Beispiel frisches Brot. Dieses Dokument beschreibt weiter, dass während des Vakuumkühlvorgangs Dampf oder Wasser in die Vakuumkammer eingebracht werden kann, um so die Luftfeuchtigkeit innerhalb der Vakuumkammer auf einem gewünschten Wert zu halten.

Während all diese Dokumente durchaus wirksame Kühlvorrichtungen beschreiben, so zeigen sie doch keine Lösung für die Reduzierung des Qualitätsverlustes, der entsteht, wenn die Luftfeuchtigkeit und/oder andere atmosphärische Bedingungen sich stark unterscheiden zwischen den Endbedingungen in der Vakuumkühlvorrichtung und den Bedingungen an dem Ort, an dem die Backwaren schliesslich die erste Zeit nach dem Verlassen der Vakuumkühlvorrichtung lagern.

**Darstellung der Erfindung**

Die Aufgabe der Erfindung ist es, eine dem eingangs genannten technischen Gebiet zugehörende Vakuumkühlvorrichtung und ein entsprechendes Verfahren zu schaffen, mit welchem Lebensmittel möglichst ohne Qualitätsverluste gekühlt werden können. Insbesondere sollen dabei durch den Kühlvorgang und die nachfolgende Lagerung bedingte Qualitätsverluste der Lebensmittel möglichst gut vermieden werden.

Die Lösung der Aufgabe ist durch die Merkmale des Anspruchs 1 definiert. Gemäss der Erfindung umfasst das Verfahren zur Vakuumkühlung von Lebensmitteln die folgenden Schritte:

    a) Platzieren von Lebensmitteln in einer Vakuumkammer.
    b) Angeben wenigstens einer Luftfeuchtigkeit und/oder einen Taupunktes in einem externen Bereich, insbesondere an einem geplanten Lagerort für die Lebensmittel.
    c) Abpumpen von Gasen in der Vakuumkammer mit Hilfe einer Abpumpvorrichtung, derart, dass ein zeitlicher Druckverlauf in der Vakuumkammer in Abhängigkeit von der wenigstens einen Luftfeuchtigkeit und/oder dem wenigstens einen Taupunkt des externen Bereichs kontrolliert wird.

Überraschenderweise wurde festgestellt, dass die atmosphärischen Bedingungen, an diesem ersten Lagerort, an dem das Brot und/oder die Backwaren und/oder andere Lebensmittel eine gleichmässige Temperatur annehmen, entscheidend dafür ist, wie sich ihre Qualität in der folgenden Zeit entwickelt.

Dabei ergibt sich insbesondere ein zeitlicher Druckverlauf, der durch die atmosphärischen Bedingungen des externen Bereichs, nämlich zumindest dem Wert für eine Luftfeuchtigkeit und/oder einem Taupunkt zumindest mitbeeinflusst wird. Der gewünschte zeitliche Verlauf des Druckes in der Vakuumkammer wird im Folgenden auch als Solldruckkurve bezeichnet.

Bei dem externen Bereich handelt es sich um einen Ort ausserhalb der Vakuumkammer. Dieser externe Bereich kann auch innerhalb der Backstube sein oder auf einem Transporter oder es handelt sich um einen Verkaufsraum oder Ähnliches. Es handelt sich insbesondere um den Bereich, in dem die Lebensmittel nach der Kühlung eine gleichmässige Temperatur annehmen.

Mit einer gleichmässigen Temperatur ist hier gemeint, dass die Temperatur im Inneren der Backwaren oder der Lebensmittel und an deren Kruste beziehungsweise Oberfläche im Wesentlichen dieselbe ist.

In der Regel brauchen Lebensmittel, insbesondere Backwaren, ca. 20 bis 60 Minuten, um, aus der Vakuumkühlvorrichtung entnommen, eine solche gleichmässige Temperatur anzunehmen. Dementsprechend handelt es sich bei dem externen Bereich insbesondere um den Bereich, in dem sich die Lebensmittel 20 bis 60 Minuten nach dem Vakuumkühlvorgang und/oder nach der Entnahme aus der Vakuumkammer befinden werden.

Insbesondere handelt es sich bei dem externen Bereich um einen Bereich, in welchem die Lebensmittel sich vor der Kühlung befinden. Bevorzugt handelt es sich bei dem externen Bereich um einen Bereich, in welchem sich die Lebensmittel vor und/oder nach der Kühlung befinden. Die Lebensmittel werden in dem externen Bereich vor der Kühlung insbesondere gelagert und/oder vorverarbeitet und/oder zwischengelagert. Die Lebensmittel werden in dem externen Bereich nach der Kühlung insbesondere zum weiteren Abkühlen gelagert und/oder weiterverarbeitet.

Bei den Lebensmitteln handelt es sich insbesondere um Rohstoffe und/oder Fertigprodukte und/oder Halbfertigprodukte. Rohstoffe sind insbesondere Mehle (z.B. Weizenmehl, Roggenmehl, Dinkelmehl, Reismehl, Maismehl von beliebigem Mahlgrad), Griess, Zucker, Salze und/oder Gewürze und/oder andere Zusätze. Bevorzugt handelt es sich bei den Rohstoffen um, im trockenen Zustand, rieselfähige Rohstoffe. Bei den Halbfertigprodukten handelt es sich insbesondere um Teigrohlinge und/oder Weissbackwaren und/oder Teige und/oder Vorteige und/oder Füllungen und/oder Beläge von Lebensmitteln. Bei den Fertigprodukten handelt es sich insbesondere um Backwaren wie zum Beispiel Brote, Brötchen, Kuchen, Kleingebäck, oder belegte Teige wie z.B. Pizza oder belegte Kuchen, oder gefüllte Teige wie z.B. Strudel.

Bei der atmosphärischen Bedingung kann es sich um die Luftfeuchtigkeit handeln und/oder um einen Luftdruck und/oder eine Temperatur und/oder den Taupunkt und/oder die chemische Zusammensetzung und/oder eine Angabe zum Partikelgehalt. Die Angabe zum Partikelgehalt kann zum Beispiel eine Partikelanzahlkonzentration eines bestimmten Grössenbereichs sein, eine Grössenverteilung von Partikeln, Materialien der Partikel und/oder eine Konzentration von Partikeln, insbesondere bezogen auf Partikel aus einem bestimmten Material. Je nach Lebensmittel ist es nun vorteilhaft, wenn es nach dem Vakuumkühlprozess und in der Abkühlungsphase ausserhalb der Vakuumkühlung zu keinen grösseren Sprüngen und/oder Vorzeichenwechseln der Gradienten in den Parametern Temperatur, Luftdruck, Luftfeuchtigkeit und/oder Taupunkt zwischen dem Inneren des Lebensmittels und seiner Aussenseite kommt.

Im Folgenden haben wir die Problematik anhand von einem abkühlenden Brot erläutert: Durch die Vakuumkühlung ist das Innere des Brotes kälter als seine Kruste. Die Kruste wiederum ist bevorzugt wärmer als die Umgebungsluft im externen Bereich. Im Abkühlungsprozess bildet sich also rasch ein warmer Bereich unterhalb der Kruste (Warmsektor). Die Gase in diesem Bereich haben eine hohe Luftfeuchtigkeit und werden durch den Temperaturgradienten nach aussen und ins Innere des Brotes gezogen. Der warme Bereich verliert also Feuchtigkeit. Im Inneren des Brotes kondensiert diese Feuchtigkeit aus, da es dort kälter ist und daher die relative Luftfeuchtigkeit durch die Temperaturabnahme zunimmt. Ausserhalb des Brotes, also in der Umgebungsluft des externen Bereiches, kann nun unterschiedliches passieren: weist die Umgebungsluft eine tiefe relative Luftfeuchtigkeit auf, so kann sie die zusätzliche Feuchtigkeit weiter aufnehmen und das Brot als Ganzes verliert dieses Wasser. Hat die Umgebungsluft hingegen eine hohe Luftfeuchtigkeit, so kondensiert die Feuchtigkeit aus dem warmen Bereich schon im oberen Teil der Kruste und wird an dieser Stelle vom Brot wieder aufgenommen. Das Brot als Ganzes trocknet also weniger aus, dafür wird der Bereich in der Nähe der Kruste aber feuchter. Es hängt nun von der Durchlässigkeit des Brotes im Inneren und in seiner Kruste und von den Temperaturunterschieden zwischen Kerntemperatur und Warmsektor beziehungsweise Warmsektor und Aussentemperatur ab, ob und wieviel Feuchtigkeit nach Innen beziehungsweise nach Aussen transportiert wird.

Die atmosphärischen Bedingungen des externen Bereiches, also z.B. die Luftfeuchtigkeit, die Temperatur und/oder der Druck, sind gegeben. Ebenso ist für eine bestimmte Art von Lebensmitteln, insbesondere für eine bestimmte Art von Backwaren, bekannt, wie durchlässig dieses in unterschiedlichen Regionen für Gase beziehungsweise Wasserdampf ist und wie Feuchtigkeit in seinem Inneren nach dem Backen verteilt ist. Durch eine gezielte Steuerung des Vakuumkühlprozesses lässt sich nun aber zum einen der Feuchtigkeitsgehalt in den Lebensmitteln beziehungsweise Backwaren regulieren und zum anderen die Temperaturverteilung im Inneren.

Durch einen eher langsamen Druckabfall im Vakuumkühlprozess entsteht eine gleichmässigere Temperaturverteilung und eine gleichmässigere Feuchtigkeitsverteilung. In trockener, kälterer Umgebungsluft kühlt das Brot also im Wesentlichen von aussen nach innen hin vollständig ab. Auf Grund der eher kleinen Gradienten trocknet das Brot primär an der Oberfläche etwas aus, bis diese mit der Umgebungsluft im Gleichgewicht ist. Im Inneren kann das Brot hingegen eine gleichmässig verteilte, höhere Feuchtigkeit halten.

Ein schneller Druckabfall im Vakuumkühlprozess erzeugt einen deutlichen Unterschied zwischen einem kalten und eher trockenen Inneren und einer wärmeren Kruste. Beim Abkühlen ausserhalb der Kammer entsteht nun ein ausgeprägter Warmsektor von dem aus Feuchtigkeit sowohl nach Innen als auch nach Aussen strömt. Bei einer hohen Aussenluftfeuchtigkeit wird aber ein Austrocknen verhindert und stattdessen wird der bei der Kühlung eher getrocknete Innenbereich wieder befeuchtet. Das abgekühlte Brot hat daher wiederum eine gleichmässige Feuchtigkeitsverteilung.

Neben einem Temperaturgradienten, werden eine Luftströmung und daher auch der hier beschriebene Feuchtigkeitstransport auch von dem Druckgradienten zwischen Lebensmittelinnerem und dem externen Bereich bestimmt.

Da es sich bei Lebensmitteln und insbesondere bei Broten nicht um analytisch perfekt beschreibbare und genau reproduzierbare Waren handelt, empfiehlt es sich in der Praxis, die Druckabfallkurven experimentell zu ermitteln und theoretische Überlegungen, insbesondere zum extrapolieren, zum Verständnis und zur Planung weiterer Versuche zu nutzen.

Kennt man nun die Bedingung im externen Bereich, in dem das Lebensmittel sich nach der Vakuumkühlung befinden wird, so kann die Druckkurve innerhalb der Vakuumkammer also derart angepasst werden, dass am Ende des Vakuumkühlprozesses das Lebensmittel eine Temperatur- und/oder eine Innendruck- und/oder eine Feuchtigkeitsverteilung beziehungsweise Temperatur, Innendruck und Feuchtigkeitswerte besitzt, die auf diejenigen des externen Bereiches abgestimmt werden. Diese Abstimmung ist derart, dass die Feuchtigkeitsverteilung und die Struktur der Lebensmittel zu dem Zeitpunkt, an dem sie eine gleichmässige Temperatur haben, den gewünschten Verteilungen möglichst nahe kommen. Damit wird der Qualitätsverlust, der nach der Vakuumkühlung im externen Bereich passiert, vermindert oder sogar ein Qualitätsverlust, der bei der Vakuumkühlung auftritt, ausgeglichen.

Mehl und/oder andere Rohstoffe eines Teiges werden vor der Verarbeitung bevorzugt auf eine Temperatur gekühlt, die möglichst gut an die gewünschte Teigtemperatur angepasst ist oder unterhalb der Zieltemperatur des Teiges liegt. Bei der Wahl dieser Zieltemperatur ist zu beachten, dass der Teig durch die Umgebungsbedingungen und z.B. durch Kneten noch bei der Verarbeitung seine Temperatur ändern kann und die Zieltemperatur daher bevorzugt durch die atmosphärischen Umgebungsbedingungen am Verarbeitungsort und/oder Lagerort nach der Kühlung angepasst wird.

Um mithilfe der Vakuumkühlung nun die gewünschte Zieltemperatur präzise zu erreichen, wird bevorzugt mindestens eine atmosphärische Bedingung in einem ersten Lagerort des Mehles oder der Rohstoffe vor der Kühlung bestimmt. Bevorzugt werden zumindest die Temperatur und/oder die Luftfeuchtigkeit und/oder der Taupunkt in dem Lagerort vor der Kühlung bestimmt. Bevorzugt wird zusätzlich oder alternativ mindestens eine atmosphärische Bedingung in einem Lagerort oder Weiterverarbeitungsort, an welchem sich die Rohstoffe oder das Mehl nach der Kühlung befinden sollen, bestimmt.

Die Abpumpvorrichtung wird bevorzugt nun so gesteuert, dass sich die Rohstoffe unkontrolliert in der Vakuumkammer verteilen und/oder unkontrolliert abgepumpt werden. Da diese unerwünschte Verteilung zum einen durch unkontrolliertes Verdampfen von Flüssigkeiten am und im Rohstoff geschehen kann und zum anderen durch eine ungleichmässige Temperaturverteilung am und im Rohstoff, kann dieser Effekt bei Kenntnis von zumindest einer atmosphärischen Bedingung im externen Bereich vermindert werden. Vorteilhalf ist hierbei insbesondere die Nutzung der Parameter, Taupunkt und/oder Luftfeuchtigkeit und/oder Temperatur. Gleichzeitig sollen durch das Abpumpen das Mehl oder die Rohstoffe bevorzugt auf die Zieltemperatur gebracht werden. Diese Zieltemperatur wird bevorzugt von mindestens einer atmosphärischen Bedingung am Lagerort oder Weiterverarbeitungsort, an welchem sich die Rohstoffe oder das Mehl nach der Kühlung befinden sollen, bestimmt. Bei der mindestens einen vorzugsweise genutzten Bedingung am Lagerort oder Weiterverarbeitungsort, an welchem sich die Rohstoffe oder das Mehl nach der Kühlung befinden sollen, handelt es sich insbesondere um die Temperatur und/oder die Luftfeuchtigkeit und/oder den Taupunkt.

Ein solcher kontrollierter Kühlvorgang für Mehle und/oder andere Rohstoffe führt weiter dazu, dass das Mehl und/oder der andere Rohstoff gleichzeitig kontrolliert getrocknet werden kann.

Bevorzugt kann Mehl, insbesondere 100 - 500 kg, speziell 200 - 275 kg, insbesondere bis zu 250 kg Mehl, mit dem Verfahren in wenigen Minuten, bevorzugt 4-6 Minuten, um beispielsweise 5 - 30°C, insbesondere 10 - 25°C, speziell 15 - 23°C oder um 20°C gekühlt werden.

Eine Kontrolle des Abpumpens der Gase kann bevorzugt dadurch geschehen, dass Vakuumpumpen oder andere Absaugvorrichtungen in ihrer effektiven Leistung kontrolliert werden und/oder indem mit Ventilen die Vakuumkammer gezielt belüftet wird und/oder mithilfe von Ventilen die Vakuumkammer gezielt abgepumpt wird.

In einer bevorzugten Ausführungsform wird die wenigstens eine atmosphärische Bedingung des externen Bereichs, insbesondere des geplanten Lagerortes der Lebensmittel, durch eine manuelle Eingabe angegeben.

Eine manuelle Eingabe kann zum Beispiel über einen Schalter, über Tasten mit Standardwerten, über einen Touchscreen, über eine Fernbedienung und/oder ähnliche Eingabemittel geschehen. Dabei kann der Nutzer zum Beispiel davon ausgehen, dass sich die atmosphärischen Bedingungen im externen Bereich nicht ändern, während die Vakuumkühlung durchgeführt wird, sodass er einen, zu Beginn der Vakuumkühlung gemessenen, Wert angibt. Eine manuelle Eingabe bietet sich an, wenn der externe Bereich immer wieder wechselt, zum Beispiel wenn eine Bäckerei Backwaren teilweise versendet und teilweise vor Ort in Verkaufsräumen anbietet.

In einer weiteren bevorzugten Ausführungsform wird die wenigstens eine atmosphärische Bedingung des externen Bereichs, insbesondere des geplanten Lagerortes der Lebensmittel, durch eine Übertragung von Sensordaten angegeben.

Die Installation und Nutzung von Sensoren und die direkte Übertragung der so ermittelten Daten an die Vakuumkühlvorrichtung bietet sich an, wenn der externe Bereich immer wieder derselbe ist. Also wenn es sich zum Beispiel um eine Bäckerei handelt, die ausschliesslich oder primär in ihren eigenen Verkaufsräumen verkauft und ihre Backwaren auch direkt nach der Vakuumkühlung dort präsentiert.

In einer weiteren bevorzugten Ausführungsform wird die wenigstens eine atmosphärische Bedingung des externen Bereichs, insbesondere des geplanten Lagerortes der Lebensmittel, durch eine Prognoserechnung angegeben.

Prognoserechnungen bieten sich an, wenn keine Messungen vorgenommen werden können, sei es aus praktischen oder aus zeitlichen Gründen. Dies tritt zum Beispiel dann ein, wenn die Lebensmittel versendet werden sollen und direkt aus der Vakuumkühlanlage in einen LKW verladen werden, der dann rasch weite Strecken zurücklegt. Diese Prognoserechnungen können zum Beispiel von einem lokalen Wetterdienst bezogen werden und/oder es kann sich um Erfahrungswerte der Nutzer handeln.

Die atmosphärischen Bedingungen des externen Bereichs müssen nicht extrem präzise bekannt sein. Es reicht für das hier vorgestellte Verfahren zur Vakuumkühlung aus, zum Beispiel die Luftfeuchtigkeit in drei Kategorien zu unterteilen: trocken, normal und feucht. Es hängt auch von der Rezeptur beziehungsweise der Empfindlichkeit der gekühlten Lebensmittel ab, wie genau die atmosphärischen Bedingungen am externen Ort bekannt sein sollten. Ebenso bestimmen die Qualitätsanforderungen die an die Lebensmittel gestellt werden, wie präzise Daten und gegebenenfalls wie viel Parameter der atmosphärischen Bedingungen benutzt werden sollten.

Wenn es sich nur um eine sehr grobe Kategorisierung handelt, können Prognoserechnungen auch langjährige Mittelwerte sein, die zum Beispiel eine Temperatur in Abhängigkeit der Jahreszeit und/oder des Datums abschätzen. Derartige Abschätzungen können in einem Speicher in der Vakuumkühlanlage hinterlegt sein und von der Steuerung dort abgerufen werden, sodass die Angabe nicht bei jeder Benutzung, sondern bei der Einrichtung und/oder Wartung der Vorrichtung erfolgt.

In einer bevorzugten Ausführungsform folgt der zeitliche Druckverlauf einer Solldruckkurve, und diese Solldruckkurve ist insbesondere durch die Parameter Amplitude und Frequenz einer Vakuumpulsierung sowie einer Druckabfallzeit charakterisiert.

Bei der Vakuumpulsierung handelt es sich um ein Verfahren bei dem der Druck pulsiert, also einen gewissen zeitlichen Mittelwert über- und unterschreitet. Der Mittelwert ist dabei im Allgemeinen nicht fest, sondern kann sich ändern und tut dies in vielen Fällen auch. Bevorzugt handelt es sich um einen gleitenden Mittelwert über eine Zeit von mindestens einer Periode. Eine Periode ist dabei bevorzugt gleich der Zeitspanne in der der gleitende Mittelwert genau zwei Mal überschritten wird oder gleich der Zeitspanne in der der gleitende Mittelwert genau zwei Mal unterschritten wird. Die Dauer einer Periode kann mit der Zeit variieren. Eine andere Möglichkeit die Vakuumpulsierung zu beschreiben ist, einen Hochpassfilter auf die Solldruckkurve anzuwenden.

Die Werte einer oder mehrerer der Parameter "Amplitude der Vakuumpulsierung", "Frequenz der Vakuumpulsierung" und/oder "Druckabfallzeit" sind von den atmosphärischen Bedingungen des externen Bereichs, insbesondere des geplanten Lagerortes, und insbesondere auch der Art der Lebensmittel abhängig. Dabei werden insbesondere die Werte der Frequenz und Amplitude der Vakuumpulsierung zumindest auch durch die Art der Lebensmittel bestimmt und der Wert der Druckabfallzeit wird zumindest auch von den atmosphärischen Bedingungen des externen Ortes, insbesondere des geplanten Lagerortes, bestimmt.

Das hier vorgeschlagene Verfahren, welches insbesondere eine Überlagerung einer mittleren Solldruckkurve mit einer Vakuumpulsierung vorschlägt, erlaubt es, Lebensmittel effizient zu kühlen, ohne dass sich ein zu starker Druckgradient innerhalb des Lebensmittels aufbaut. Starke Druckgradienten innerhalb des Lebensmittels können dazu führen, dass dieses aufplatzt und daher unansehnlich wird.

Die mittlere Solldruckkurve ist dabei bevorzugt der zeitliche Verlauf des zeitlichen Mittelwertes des Druckes um welchen der Druck bei der Vakuumpulsierung pulsiert. Insbesondere kann die mittlere Solldruckkurve der gleitende Mittelwert über jeweils eine Periode, solange eine Vakuumpulsierung vorliegt und gleich der Solldruckkurve wenn keine Vakuumpulsierung mehr vorliegt oder nie vorgelegen hat, sein. Es ist aber auch möglich, dass es sich bei der mittleren Solldruckkurve um eine anders geglättete Solldruckkurve handelt. So kann eine mittlere Solldruckkurve zum Beispiel auch als gleitender Mittelwert über konstante Zeitintervalle definiert werden oder als mit einem Tiefpassfilter gefilterte Solldrucckurve.

Die Druckabfallzeit soll eine Zeit sein, die charakterisiert, wie schnell der mittlere Druck, unabhängig von der darüber gelagerten Vakuumpulsierung, sich mit der Zeit verändert. Es kann sich dabei zum Beispiel um eine Konstante, vergleichbar mit der Halbwertszeit bei radioaktivem Zerfall handeln, die einen exponentiellen Abfall beschreibt. Es kann sich aber auch um einen anderen Parameter einer vordefinierten Kurve handeln, wie zum Beispiel die Zeit bis die Hälfte des Anfangsdruckes erreicht wird, unabhängig davon, ob die Kurven einen exponentiellen Abfall beschreibt oder nicht. Es kann sich bei der Druckabfallzeit aber auch um die Zeit handeln, in der sich der Druck in einem speziellen Bereich hält (zum Beispiel die Zeit in der der Druck von 20% des Umgebungsdruckes auf 10% fällt).

Die mittlere Solldruckkurve, also der definierte zeitliche Verlauf des mittleren Drucks in der Vakuumkammer, kann durch eine beliebige Kurve beschrieben werden. Bevorzugt besitzt die Solldruckkurve eines Kühlverlaufes ein Maximum am Anfang des Kühlverfahrens. Bevorzugt fällt die mittlere Solldruckkurve monoton ab oder bleibt über eine gewisse Zeit auf einem konstanten Wert. Es ist aber auch möglich, dass auch der mittlere Druck während des Kühlverfahrens wieder ansteigt und dass gegebenenfalls auch bis auf den Umgebungsdruck. Auf diese Art kann die Kühlung deutlich reduziert werden, was dazu führt, dass Druck- und/oder Temperatur- und/oder Feuchtigkeitsgradienten innerhalb eines Lebensmittels reduziert werden. Ein Lebensmittel mit einer vergleichsweise dichten Oberfläche kühlt beim Vakuumverfahren zum Beispiel primär an dieser Oberfläche. Kühlpausen, das heisst Zeiten mit höherem Druck, erlauben es der Wärme aus dem Inneren via Wärmeleitung die Oberfläche effizienter zu erreichen. Da sich ein solches Lebensmittel durch einen Unterdruck aufbläht, ist die Wärmeleitung, die ja bei grossen Festkörperkontaktflächen wesentlich effizienter ist, bei Unterdruck reduziert. Da eine dichte Oberfläche auch dazu führt, dass es bei solchen Lebensmitteln kaum zu einem wesentlichen Abfall des Druckes im Inneren kommt, ist auch die Verdunstungskühlung im Inneren weniger effektiv. Eine mittlere Solldruckkurve in zum Beispiel Wellenform bietet sich daher für derartige Lebensmittel an.

Mit der Vakuumpulsierung lässt sich die Belastung auf diejenigen Oberflächen reduzieren, die Gas im Inneren der Lebensmittel zumindest teilweise einschliessen. Diese Oberflächen werden bei einer Änderung des Aussendrucks belastet: Sinkt der Aussendruck, so werden sie vom Gasdruck in ihrem Inneren nach aussen gedrückt und gedehnt, steigt der Aussendruck über den Innendruck, so drückt der Aussendruck sie nach innen, was wieder zu einer Dehnung führt. Ein schneller Wechsel zwischen höheren und tieferen Drücken reduziert die zeitliche Dauer der Maximalbelastung und verhindert, dass die stark gedehnten Oberflächen austrocknen. Auch wird dadurch die Wärmeleitung gefördert, so dass Wärme von Stellen, an denen keine Verdunstung stattfinden kann, effizient an diejenigen Stellen gelangen kann, die effizient durch Verdunstung bei Unterdruck gekühlt werden.

Während die mittlere Solldruckkurve die Temperatur- und/oder Druck- und/oder Feuchtigkeitsverteilung auf grösseren Skalen, also in Bruchteilen des Radius der Lebensmittel bestimmen kann, so kontrolliert die Vakuumpulsierung diese Verteilungen auf einer kleineren Skala und zwar im Wesentlichen auf Längen in der Grössenordnung von Bruchteilen von Poren und Gasbläschen in den Lebensmitteln. Die Zeitskalen von der mittleren Solldruckkurve und der Vakuumpulsierung können also bevorzugt in einer gewissen Abhängigkeit von der Wärmeleitfähigkeit des Lebensmittels gewählt werden. Damit ist für die Solldruckkurve insbesondere die Wärmeleitfähigkeit des Lebensmittels in seiner normalen Struktur, das heisst zum Beispiel mit seiner typischen Porengrösse, zu nutzen und für die Vakuumpulsierung die Wärmeleitfähigkeit von alleine dem festen Bestandteil des Lebensmittels (also zum Beispiel ohne Poren).

In einer weiteren bevorzugten Ausführungsform ist das Verfahren zur Vakuumkühlung von Lebensmitteln durch folgende weitere Schritte gekennzeichnet: Zwei oder mehr Vakuumkammern werden mit derselben Abpumpvorrichtung verbunden, und sie werden in der folgenden Abfolge genutzt:

a) In der ersten Vakuumkammer herrscht ein Zielunterdruck. Währenddessen wird eine zweite Vakuumkammer mit den Lebensmitteln beladen und luftdicht geschlossen.

b) Die erste Vakuumkammer und die zweite Vakuumkammer werden derart miteinander verbunden, dass ein Druckausgleich zwischen den beiden Vakuumkammern stattfindet.

c) Die erste und die zweite Vakuumkammer werden derart voneinander getrennt, dass es keinen Druckausgleich mehr zwischen den beiden Vakuumkammern gibt.

d) Die zweite Vakuumkammer wird derart mit der Abpumpvorrichtung verbunden, dass durch die Abpumpvorrichtung der Druck in der zweiten Vakuumkammer weiter abnimmt, bis der Zielunterdruck erreicht ist, während die erste oder eine weitere Vakuumkammer erneut mit Lebensmitteln beladen und luftdicht geschlossen wird.

e) Die Punkte b) bis d) werden wiederholt, wobei die zweite Vakuumkammer an die Stelle der ersten Vakuumkammer tritt und die erste oder weitere Vakuumkammer an die Stelle der zweiten Vakuumkammer.

Dieses Verfahren hat den Vorteil, dass der Unterdruck in der einen Kammer genutzt wird, um den Druck der gerade frisch geschlossenen Kammer zu senken. Nach dem Schliessen herrscht in der Kammer zunächst Umgebungsdruck. Auf diese Art der Verbindung der Kammern miteinander wird Pumpenleistung gespart. Ausserdem ermöglicht dieser gestaffelte Betrieb von mehreren Vakuumkammern einen zügigen Durchlauf, da immer eine Kammer be- und entladen werden kann, während in der anderen das Kühlverfahren läuft. Ausserdem wird die Abpumpvorrichtung gleichmässig belastet und muss nicht ab- und angestellt werden und/oder gegen stark unterschiedliche Drücke pumpen.

Bei zwei gleich grossen Vakuumkammern von denen in einer ein gegenüber dem Umgebungsdruck vernachlässigbarer Druck herrscht und in der anderen Umgebungsdruck, ergibt der Druckausgleich in beiden Vakuumkammern ein Druck von ungefähr der Hälfte des Umgebungsdruckes.

Ein Verfahren, welches nur eine Vakuumkammer nutzt oder mehrere Vakuumkammern, die aber nicht derart verbunden sind, dass das hier vorgeschlagene bevorzugte Verfahren sich für sie eignet, können trotzdem vorteilhaft sein, und zwar, weil der einfachere Aufbau sie günstiger und weniger fehleranfällig macht.

Die Anzahl der in einem solchen Kreisverfahren benutzten Vakuumkammern richtet sich bevorzugt nach der Zeit, die benötigt wird, um Vakuumkammern zu be- und entladen. Sind die Anzahl der Kammern, die Länge des Kühlprozesses und die Länge der Dauer des Ent- und Beladens gut aufeinander abgestimmt, so kann ein kontinuierlicher Arbeitsgang entstehen, mit nur wenigen Wartezeiten.

In einer weiteren bevorzugten Ausführungsform ist die Abpumpvorrichtung, die in diesem Verfahren zur Vakuumkühlung genutzt wird, so gestaltet, dass sie einen Unterdruckspeicher umfasst. In diesem Unterdruckspeicher erzeugt eine Vakuumpumpe einen Unterdruck. Zum Abpumpen der Vakuumkammer wird dann die Vakuumkammer mit dem Unterdruckspeicher verbunden. Insbesondere wird diese Verbindung in einem kontrollierten Maße hergestellt. Auf diese Art wird ein, bevorzugt zumindest teilweiser, Druckausgleich zwischen Unterdruckspeicher und Vakuumkammer hergestellt.

Bei der Vakuumpumpe kann es sich um eine einzelne Vakuumpumpe oder eine Kombination von Vakuumpumpen unterschiedlicher oder gleicher Bauart handeln. Es kann sich auch um einen Seitenkanalverdichter oder eine Pumpenkombination mit einem Seitenkanalverdichter handeln. Bevorzugt wird unter Vakuumpumpe im Sinne dieser Erfindung eine Vorrichtung oder eine Kombination von Vorrichtungen verstanden, mit der ein Unterdruck erzeugt werden kann.

Ein Unterdruckspeicher erlaubt es, dass der Unterdruck gerade am Anfang kontrolliert gesenkt werden kann, ohne dass die Pumpen eine übermässig starke Leistung erbringen müssen. Im Prinzip kann so eine schwächere Pumpe ausgeglichen werden, da sie über einen längeren Zeitraum den Unterdruckspeicher leeren kann, und trotzdem ein relativ schneller Druckabfall in der Vakuumkammer einfach dadurch erreicht werden kann, dass die Vakuumkammer und der Unterdruckspeicher miteinander verbunden werden. Ist diese Verbindung derart herstellbar, dass es nicht sofort zu einem vollständigen Druckausgleich zwischen Unterdruckspeicher und Vakuumkammer kommt, sondern dass sich dieser Druckausgleich in einem kontrollierten Maße herstellen lässt, so lässt sich auch auf diese Art die Solldruckkurve abfahren. Auch in diesem Verfahren ist es möglich, dass die Vakuumpumpe immer gegen einen ähnlichen Unterdruck arbeitet, wie dies schon bei der Ausführungsform mit mehreren verschalteten Vakuumkammern der Fall war. Damit eine gewünschte Solldruckkurve tatsächlich abfahrbar ist, ist es entscheidend, dass der Unterdruckspeicher und die Vakuumkammer im richtigen Verhältnis zueinander stehen: Der minimale Druck, der sich in der Vakuumkammer durch einen Druckausgleich mit einem Unterdruckspeicher erreichen lässt, kann wie folgt abgeschätzt werden: $p_{min} = \frac{1+x}{1+y} p_{max}$. Dabei ist $p_{max}$ der Druck in der Vakuumkammer vor dem Druckausgleich. X ist das Verhältnis von dem Druck im Unterdruckspeicher zum Druck in der Vakuumkammer vor dem Druckausgleich. In vielen Fällen ist x klein gegenüber 1 und kann daher für eine erste Abschätzung vernachlässigt werden. Y ist das Verhältnis des Volumens des Unterdruckspeichers zum Volumen der Vakuumkammer.

In einer bevorzugten Ausführungsform kann der Unterdruckspeicher in seinem Volumen an die Erfordernisse der gewählten Solldruckkurve angepasst werden. Dies kann zum Beispiel durch eine Verbindung beziehungsweise eine Trennung mehrerer Kammern geschehen, die gemeinsam einen Unterdruckspeicher bilden können. Alternativ oder ergänzend kann zum Beispiel auch ein grosser Unterdruckspeicher teilweise mit einem (nicht ausgasenden und im Unterdruck stabilen) Füllmaterial gefüllt werden wie zum Beispiel Glasmurmeln. Auf diese Art kann der Unterdruckspeicher schneller auf seinen Zieldruck abgepumpt werden, wenn für die gewählte Solldruckkurve nur ein kleineres Volumen benötigt wird.

Bei dem Unterdruckspeicher kann es sich entweder um einen ausschliesslich dazu eingesetzten Speicher handeln und/oder die sowieso vorhandenen Rohre und Leitungen können als Zwischenspeicher für dieses Verfahren genutzt werden. Auch ist es möglich, dass, wenn mehr als eine Vakuumkammer vorhanden ist, eine Vakuumkammer nicht zur Kühlung, sondern als Unterdruckspeicher und/oder als Teil des Unterdruckspeichers verwendet wird.

Das Ausmass des Druckausgleichs zwischen Vakuumkammer und Unterdruckspeicher lässt sich zum Beispiel mit Ventilen und/oder mit der Wahl des Durchmessers und/oder der Anzahl der Verbindungsrohre kontrollieren und/oder aber auch mit einem zeitlich kontrolliertem, raschen Öffnen und Schliessen von Verbindungen. Andere bekannte Methoden für einen gezielten Druckausgleich lassen sich ebenso nutzen.

In einer weiteren bevorzugten Ausführungsform wird in dem Verfahren zur Vakuumkühlung ein Seitenkanalverdichter eingesetzt. Bevorzugt wird der Seitenkanalverdichter eingesetzt, um ein Abpumpen der Gase im Unterdruckspeicher und/oder in der Vakuumkammer auf einen Unterdruck, der zwischen einem Umgebungsluftdruck und weniger als 400 mbar besonders bevorzugt weniger als 200 mbar liegt, zu ermöglichen. Zum Abpumpen der Gase in dem Unterdruckspeicher und/oder der Vakuumkammer auf tiefere Drücke wird bevorzugt eine andere Art von Vakuumpumpe genutzt. Diese Vakuumpumpe wird bevorzugt ölfrei betrieben.

Ein Seitenkanalverdichter ist eine sehr einfache und kostengünstige Art, tiefere Drücke herzustellen. Indem die andere Vakuumpumpe nicht gegen Umgebungsdruck arbeiten muss, sondern nur gegen maximal einen Druck von 400 mbar oder sogar weniger, wird die andere Vakuumpumpe geschont.

Eine öl-freie Vakuumpumpe ist beim Abpumpen von feuchter Luft von Vorteil: Öl und Feuchtigkeit können sich sonst in unschöner Weise vermischen und lassen sich im laufenden Betrieb nur schwer wieder voneinander trennen. Ausserdem wird so vermieden, dass im Fall einer Fehlfunktion Öl in die Vakuumkammer gelangt und die Lebensmittel verschmutzt.

Alternativ kann statt der Kombination aus Seitenkanalverdichter für höhere Drücke und einer anderen Vakuumpumpe für tiefere Drücke auch eine einzige Vakuumpumpe verwendet werden oder eine Kombination verschiedener oder baugleicher Vakuumpumpen die keine Seitenkanalverdichter sind, wie sie zum Beispiel in vielen Vakuumsystemen üblich sind.

In einer bevorzugten Variante ist das Vakuumsystem weiter derart abgesichert, dass im Fall eines Stromausfalles oder des Ausfalls einer Pumpe, das System als Ganzes kontrolliert belüftet wird, oder aber auch bestimmte Volumen den Unterdruck zumindest teilweise halten können. Dies kann zum Beispiel durch den Einbau von geeigneten Rückschlagventilen erreicht werden.

Eine erfindungsgemässe Vakuumkühlvorrichtung für Lebensmittel, insbesondere Backwaren, die sich insbesondere für ein erfindungsgemässes Verfahren zur Vakuumkühlung eignet, umfasst eine Vakuumkammer, eine Abpumpvorrichtung, eine Steuerung, mit welcher die Nutzung der Abpumpvorrichtung gesteuert werden kann und einen Sensor für Luftfeuchtigkeit und/oder Taupunkt in einem externen Bereich. Die Vakuumkühlvorrichtung ist dadurch gekennzeichnet, dass die Steuerung derart ausgebildet ist, dass ein Abpumpvorgang in Abhängigkeit von Luftfeuchtigkeit und/oder von dem Taupunkt eines externen Bereichs, insbesondere eines geplanten Lagerortes der Lebensmittel, die und/ oder der durch eine Übertragung von Sensordaten angegeben wird, gesteuert werden kann.

Bevorzugt wird mit der Steuerung die Abpumpvorrichtung und/oder Ventile zwischen Vakuumkammer und Abpumpvorrichtung und/oder Ventile zur Belüftung der Vakuumkammer gesteuert.

Die Steuerung kann also die angegebenen Daten einer atmosphärischen Bedingung, nämlich zumindest den Wert für eine Luftfeuchtigkeit und/oder einen Taupunkt, nutzen. Die Vakuumkühlvorrichtung erlaubt ein schonendes und schnelles Kühlen unterschiedlicher Lebensmittel und verhindert, dass diese Qualitätseinbussen erleiden, nachdem sie die Vakuumkammer verlassen haben und/oder vereinfacht und/oder verbessert die Weiterverarbeitung.

Die Steuerung kann ein integraler Bestandteil der Vakuumkammer und/oder der Abpumpvorrichtung sein. Es kann sich aber auch um eine externe Steuerung oder um eine Verknüpfung von einem Computer und einer Steuerung, die auf Steuersignale des Computers reagiert und diese in geeigneter Art an die Pumpen und/oder die Abpumpvorrichtung und/oder andere Steuerelemente wie zum Beispiel Ventile weitergibt, handeln. Die Steuerung kann auch zumindest teilweise von Hand vorgenommen werden, in dem zum Beispiel Messwerte mit einer dem Benutzer vorliegenden Solldruckkurve verglichen werden und der Benutzer dann Pumpen entsprechend den beobachteten Abweichungen von Soll- und Ist-Wert bedient.

Auch können, statt dass die Pumpen und/oder die Abpumpvorrichtung reguliert werden oder zusätzlich zu der Pumpen- oder Abpumpvorrichtungs-regulierung, bestimmte Ventile und der Durchfluss an bestimmten Orten reguliert werden und/oder ein Unterdruckspeicher gezielt zum zumindest teilweisen Druckausgleich genutzt werden. Weiter ist es möglich, dass sie Steuerung mehrere dieser Einstellmöglichkeiten gemeinsam und/oder zeitlich versetzt nutzt. So kann zum Beispiel die Leistung der Pumpen erhöht werden und gleichzeitig ein Unterdruckspeicher zum Druckausgleich genutzt werden. Es ist auch möglich, dass die Steuerung gezielt ein Reservoir, bevorzugt ein Flüssigkeitsreservoir in der Vakuumkammer heizt um eine Druckerhöhung zu verursachen. Auch kann eine gezielte Druckerhöhung oder eine Reduktion der Abpumpleistung durch ein kontrolliertes Belüften geschehen.

Bei den zu kühlenden Lebensmitteln kann es sich insbesondere um Rohstoffe wie Beispielsweise Mehl, Griess, Salz, Zucker, Gewürze und andere Zusätze handeln.

Der externe Bereich ist bevorzugt ein Bereich, in welchem die Lebensmittel nach der Kühlung gelagert oder weiterverarbeitet werden oder ein Bereich, in welchem die Lebensmittel vor der Kühlung gelagert oder verarbeitet werden. Besonders bevorzugt ist der externe Bereich der Bereich, in welchem die Lebensmittel nach der Kühlung eine gleichmässige Temperatur annehmen.

Bei den oder der zu berücksichtigenden atmosphärischen Bedingung handelt es sich zumindest um die Luftfeuchtigkeit und/oder den Taupunkt, optional weiters um die Temperatur und/oder den Druck.

In einer besonderen Ausführungsform ist die Vakuumkühlvorrichtung dadurch gekennzeichnet, dass die Steuerung derart ausgebildet ist, dass der Abpumpvorgang zusätzlich an unterschiedliche Arten von Lebensmitteln, insbesondere an unterschiedliche Arten von Backwaren, angepasst werden kann.

Insbesondere bei Backwaren zeigt es sich, dass die Backwaren unterschiedliche Abpumpvorgänge für unterschiedliche Rezepturen zu besseren Ergebnissen führen.

Ein laminierter Teig, wie zum Beispiel ein Blätterteig, kann durch einen schnellen Abpumpvorgang profitieren, da das Aufblasen und die Druckluftunterschiede bei der Vakuumkühlung dazu führen können, dass die entstehenden Backwaren besonders luftig und locker sind.

Einem Brot könnte hingegen bei derselben Behandlung seine Kruste abplatzen, was nicht den Vorstellungen des Konsumenten von einem Brot entspricht. Ein solches Brot wäre praktisch unverkäuflich.

Ebenso sind auch die Grösse und die Beschaffenheit insbesondere die äussere Beschaffenheit der Backwaren dafür entscheidend, wie sie ausserhalb und innerhalb der Vakuumvorrichtung abkühlen und dementsprechend, wo sich Kältezonen ausbilden, wo mechanische Spannungen auftreten und wie sich die Feuchtigkeit in ihnen verteilt und wieviel Feuchtigkeit verloren geht. Die "Art" eines Lebensmittels, ist daher bevorzugt nicht nur durch seine Rezeptur, sondern auch durch seine Grösse und seine Formgebung bestimmt. Bei der Kühlung von Rohstoffen wie zum Beispiel Mehl oder anderen rieselfähigen Lebensmitteln ist hingegen die Solldruckkurve derart zu wählen, dass sie nicht unkontrolliert zerstäuben, sich unkontrolliert verteilen und/oder abgepumpt werden und trotzdem die gewünschte Kühlung in kurzer Zeit erreicht wird.

In einer weiteren bevorzugten Ausführungsform umfasst die Vakuumkühlvorrichtung gemäß Anspruch 6 eine manuelle Eingabevorrichtung und/oder eine Einlesevorrichtung für Sensordaten und/oder eine Schnittstelle zum Empfang von Daten, mit der die atmosphärischen Bedingungen des externen Bereichs für die Steuerung bereitgestellt werden können.

Bei der manuellen Eingabevorrichtung kann es sich zum Beispiel um Drehschalter und/oder Auswahltasten handeln.

Bei der Einlesevorrichtung für Sensordaten kann es sich um Standardschnittstellen, wie zum Beispiel eine USB-, eine Netzwerkstecker-, eine Koaxialkabel-Buchse und/oder ein Eingang für andere Kabel, handeln. Auch kann die Einlesevorrichtung spezielle Sensoren, wie zum Beispiel eine Kamera, umfassen, die die Daten vom Sensor für atmosphärische Bedingungen ablesen und/oder es kann sich um einen Empfänger für Licht-, Infrarot-, Radio-, akustische oder andere Signale handeln. Die Übertragung der Sensordaten kann via Leistungskabel, zum Beispiel durch Modulation einer elektrischen Spannung, via Datenkabel oder kabellos erfolgen, zum Beispiel mit Infrarot und/oder Radioübermittlung und/oder über ein Wireless Network.

Die Schnittstelle zum Empfang der Daten ist eine nicht-manuelle Eingabemöglichkeit für Daten, die nicht direkt von einem Sensor produziert wurden. Es kann sich also zum Beispiel um Ergebnisse von Modellrechnungen, historische Daten, Prognoserechnungen oder Daten von Anbietern wie zum Beispiel Wetterdiensten handeln. Solche Daten können insbesondere über ein Netzwerk und/oder auf Datenträgern bereitgestellt werden. Die Schnittstelle zum Empfang der Daten kann daher ebenfalls eine Netzwerkverbindung sein. Es kann aber zum Beispiel auch oder zusätzlich um ein Diskettenlaufwerk, eine Buchse für einen USB-Stick, eine Speicherkarte oder ein CD- oder DVD- Laufwerk und/oder eine Aufnahme zum Auslesen eines anderen Speichermediums handeln. Weiter ist es auch möglich, dass die Schnittstelle eine Spracherkennung und ein Mikrophon umfasst um zum Beispiel telefonische Ansagen oder Mitteilungen eines Benutzers zu erfassen.

Auch kann die Anlage zum Beispiel mit einem lokalen Wetterdienst verbunden sein und über das Internet und/oder ähnliche Datennetzwerke Daten von dieser Wettervorhersage beziehen.

Schliesslich ist es auch möglich, dass prognostizierte Daten auf einem Datenspeicher vorliegen. Diese Prognose kann detailliert sein oder vergleichsweise grob. Es kann sich also zum Beispiel über Mittelwerte, die über mehrere Jahre zur entsprechenden Jahreszeit gemessen wurden, handeln.

Es kann sich bei den atmosphärischen Bedingungen des externen Bereichs um ein oder mehrere der physikalischen Parameter der atmosphärischen Bedingungen handeln, insbesondere kann es sich um die Luftfeuchtigkeit, die Temperatur und/oder den Luftdruck in dem externen Bereich handeln.

Bei dem externen Bereich handelt es sich insbesondere um den Ort, an dem die Lebensmittel eine gleichmässige Temperatur annehmen. Eine gleichmässige Temperatur bedeutet hier wiederum, dass die Lebensmittel im Wesentlichen die gleiche Temperatur an allen Stellen in ihrem Inneren und Äusseren haben.

In einer weiteren bevorzugten Ausführungsform umfasst die Vakuumkühlvorrichtung eine Kondenswasseraufnahme.

Das Funktionsprinzip einer Vakuumkühlvorrichtung ist das, dass die latente Wärme des verdampfenden Wassers genutzt wird zur Kühlung der Lebensmittel. Dies heisst im Umkehrschluss, dass in einer Vakuumkühlvorrichtung die relative Luftfeuchtigkeit bevorzugt hoch ist und somit an, im Vergleich zum abkühlenden Lebensmittel kalten, Flächen Kondenswasser auftritt. Dieses wird bevorzugt abgeführt. Dafür eignet sich eine Kondenswasseraufnahme.

Zusätzlich oder als Alternative zu einer Kondenswasseraufnahme ist es auch möglich, Vakuumpumpen einzubauen, die gegen die feuchte Luft unempfindlich sind. Um Kondensation an unerwünschten Stellen zu verhindern, sollten solche möglichst trockenen Stellen bevorzugt geheizt werden oder auf andere Art wärmer als ihre Umgebung gehalten werden.

Die Kondenswasseraufnahme ist bevorzugt in einem unteren Teil der Vakuumkammer, also unterhalb von Aufnahmen für die Lebensmittel angeordnet, und/oder auch in einem Unterdruckspeicher, der sich ausserhalb der Vakuumkammer, in der Lebensmittel zur Kühlung aufgenommen werden, befindet. So wird verhindert, dass bei einem Überlaufen und/oder Heruntertropfen des Kondenswassers die Lebensmittel unerwünschterweise befeuchtet werden. Ausserdem verhindert die Konvektion der Gase in der Vakuumkammer, dass die Wärme der Lebensmittel effizient an die möglichst kalte Kondenswasseraufnahme geleitet wird.

Die Kondenswasseraufnahme befindet sich bevorzugt an einem Ort vor den Vakuumpumpen, sodass die Vakuumpumpen eine vergleichsweise trockene Luft abpumpen.

Alternativ können die Vakuumpumpen aber auch die feuchte Luft abpumpen, und diese dann in die Umgebung oder an einen geeigneten Ort leiten, wo sie zum Beispiel auf der Aussenseite eines Gebäudes sich mit der Umgebungsluft vermischen kann und/oder kondensiert.

In einer weiteren bevorzugten Ausführungsform umfasst die Vorrichtung einen Speicher, in welchem unterschiedliche Solldruckkurven für die Steuerung bei unterschiedlichen atmosphärischen Bedingungen des externen Bereichs und insbesondere für unterschiedliche Arten von Lebensmitteln hinterlegt sind, und/oder in dem ein Programm hinterlegt ist, welches in Abhängigkeit der atmosphärischen Bedingungen des externen Bereichs, und insbesondere in Abhängigkeit der Art der Lebensmittel, die Solldruckkurve bestimmen kann.

In dieser Ausführungsform wird die Solldruckkurve entweder aus einer grossen Menge an gespeicherten Solldruckkurven ausgewählt oder sie wird berechnet oder ein Mischverfahren wird angewendet, bei dem zunächst aus einer Liste von Solldruckkurventypen ein Kurventyp gewählt wird, der anschliessend durch die angegebenen atmosphärischen Bedingungen und/oder die Art der Lebensmittel gezielt an die jeweilige Situation angepasst wird.

Die Solldruckkurven eines Kurventyps können zum Beispiel durch drei Parameter charakterisiert werden. Bei denen kann es sich zum Beispiel um die Amplitude und die Frequenz einer Vakuumpulsierung und eine Druckabfallzeit handeln. Die Kurven können allerdings auch ganz unterschiedliche Formen für unterschiedliche Lebensmittel und/oder unterschiedliche atmosphärische Bedingungen haben. In diesem Fall bietet es sich an, dass eine Datenbank an unterschiedlichen Solldruckkurven vorliegt und entsprechend abgerufen wird. Lässt sich hingegen für die unterschiedlichen Lebensmittel und die unterschiedlichen atmosphärischen Bedingungen eine klare Skalierung festlegen, mit der die Kurven berechnet werden können, so empfiehlt es sich, einen Kurventyp zu charakterisieren und diesen je nach ermittelten Parametern, also ein oder mehrere Werte der atmosphärischen Bedingungen und/oder Lebensmittelart, zu charakterisieren und gezielt zu verformen.

Bei einer Solldruckkurve handelt es sich um einen zeitlichen Verlauf eines gewünschten Druckes innerhalb der Vakuumkammer. Die Steuerung der Abpumpvorrichtung regelt den Druck innerhalb der Vakuumkammer möglichst derart, dass der Druckverlauf im Wesentlichen der Solldruckkurve folgt.

Insbesondere kann es aber auch Solldruckkurven für Spezialsituationen geben. So kann zum Beispiel eine Solldruckkurve hinterlegt sein für den Fall, dass offensichtlich fehlerhafte Messwerte und/oder Sensorwerte und/oder atmosphärische Bedingungen angegeben werden. Es kann eine Solldruckkurve geben für den Fall, dass die Abpumpvorrichtung erkennt, dass sie vermutlich nicht voll funktionstüchtig ist. Es kann eine Solldruckkurve vorliegen für den Fall, dass besonders schnell gearbeitet werden muss und/oder dass besonders schonend gearbeitet werden muss.

In einer bevorzugten Ausführungsform ist die Solldruckkurve durch die Parameter Amplitude und Frequenz von einer Vakuumpulsierung sowie einer Druckabfallzeit charakterisiert. Eine oder mehrere dieser Parameter werden durch eine Abhängigkeit von den atmosphärischen Bedingungen des externen Bereichs, insbesondere des geplanten Lagerortes, und/oder insbesondere auch der Art der Lebensmittel bestimmt. Dabei werden die Werte der Frequenz und Amplitude der Vakuumpulsierung zumindest auch durch die Art der Lebensmittel bestimmt und der Wert der Druckabfallzeit wird zumindest auch von den atmosphärischen Bedingungen des externen Ortes, insbesondere des geplanten Lagerortes, bestimmt.

Die Vakuumpulsierung in ihrer Frequenz und ihrer Amplitude bestimmt dabei insbesondere, wie sich das Lebensmittel im Kleinen, also in der Grössenskala seiner Poren und/oder Gaseinschlüsse in der Vakuumkammer verhält: wie stark es sich dort aufbläht, zusammenzieht, wie viel Feuchtigkeit es dort verliert.

Die Druckabfallzeit bestimmt hingegen, wie gleichmässig das Lebensmittel auskühlt, also das Verhalten auf einer Grössenskala im Bereich der Ausdehnung des Lebensmittels. Im Allgemeinen wird bei einer Vakuumkühlung das Lebensmittel von innen nach aussen gekühlt, wenn das Lebensmittel derart gasdurchlässig und/oder derart verformbar ist, dass es auch im Inneren zu einer starken Sublimation kommt.

Alternativ oder ergänzend kann es für unterschiedliche Lebensmittel und/oder unterschiedliche atmosphärische Bedingungen auch ganz unterschiedliche Kurventypen von Solldruckkurven geben. Die genaue Wahl der Solldruckkurve für ein Set von Parametern, also mindestens einen Wert von atmosphärischen Bedingungen und gegebenenfalls eine Lebensmittelart, ergeben sich bevorzugt durch entsprechende Versuche. Derartige Versuche können von dem Hersteller einer erfindungsgemässen Vakuumkühlvorrichtung für den Benutzer durchgeführt werden oder ein Benutzer kann sie für sich selbst und seine Rezepturen anpassen beziehungsweise durchführen und insbesondere dann in einem Speicher der Steuerung und/oder auf einem von der Steuerung einlesbaren Datenträger hinterlegen.

In einer bevorzugten Ausführungsform ist die Vakuumkühlvorrichtung dadurch gekennzeichnet, dass die Abpumpvorrichtung derart an mehrere Vakuumkammern angeschlossen ist, dass ein Druck in den unterschiedlichen Vakuumkammern unabhängig voneinander regelbar ist. Dabei sind die Vakuumkammern bevorzugt untereinander derart verbunden, dass ein Druckausgleich zwischen zwei oder mehr der mehreren Vakuumkammern möglich ist.

Mehrere Vakuumkammern an eine Abpumpvorrichtung anzuschliessen ist wirtschaftlich, da in der Regel jede Vakuumkammer be- und entladen werden muss und die Leistung der Abpumpvorrichtung in dieser Zeit zum Abpumpen einer anderen Kammer eingesetzt werden kann.

Sind die Vakuumkammern zudem untereinander verbunden, so kann jede Vakuumkammer für die anderen Vakuumkammern als Unterdruckspeicher oder als Teil des Unterdruckspeichers genutzt werden. Die Vakuumkammern können sich entweder alle dazu eignen, Lebensmittel aufzunehmen und die Vakuumkühlung an ihnen durchzuführen oder einzelne Vakuumkammern können als reiner Unterdruckspeicher ausgelegt sein. Ein reiner Unterdruckspeicher ist im Sinne dieser Anmeldung eine Vakuumkammer oder ein Vakuumbehälter, der sich nicht zur Aufnahme von Lebensmitteln eignet, zum Beispiel weil er keine Tür aufweist, durch welche Lebensmittel kontrolliert in der Kammer platziert und wieder entnommen werden können.

Eine Verbindung der alleinigen Abpumpvorrichtung an mehreren, unabhängig regelbaren Vakuumkammern lässt sich über geeignete Ventile realisieren. Bevorzugt sind die Ventile elektronisch steuerbar und können von der Steuerung der Vakuumkühlvorrichtung angesprochen werden. Dies gilt für Ventile zwischen Abpumpvorrichtung und den jeweiligen Vakuumkammern, aber insbesondere auch für Ventile zwischen unterschiedlichen Vakuumkammern. Ausser durch Ventile kann ein zumindest teilweiser Druckausgleich bzw. ein Abpumpen auch durch das Herstellen beziehungsweise Unterbrechen von Verbindungen erreicht werden und/oder indem Verbindungen gezielt verengt oder erweitert werden.

Da mit zunehmender Anzahl an Ventilen beziehungsweise Druckausgleichsregulierungen und Verbindungen die Fehleranfälligkeit, die Kosten und der Regelungsaufwand steigen, kann es von Vorteil sein, nur eine einzelne Vakuumkammer zu nutzen oder mehrere Vakuumkammern nicht miteinander zu verbinden, sondern sie unabhängig voneinander an der selben Abpumpvorrichtung oder an unabhängigen Abpumpvorrichtungen zu betreiben.

Die Vakuumkühlvorrichtung umfasst bevorzugt einen oder mehrere Lagercontainer. Diese Lagercontainer können unabhängig von der Vakuumkammer an die Abpumpvorrichtung angeschlossen werden, und in ihnen ist ein Unterdruck erzeugbar und zwar insbesondere durch die Abpumpvorrichtung. Der Unterdruck kann dabei insbesondere unabhängig von der Abpumpvorrichtung im Lagercontainer erhalten werden.

Bei dem Unterdruck handelt es sich bevorzugt um einen Druck von weniger als 500 mbar, insbesondere handelt es sich bevorzugt um einen Druck von weniger als 200 mbar.

Es wurde festgestellt, dass sich viele Lebensmittel unter Vakuum länger halten als bei Normaldruck. Ein einmal hergestellter Unterdruck benötigt keine weitere Energie, anders als zum Beispiel eine Kühlkammer. Daher ist die Lagerung von Lebensmitteln im Vakuum vergleichsweise günstig. Dadurch, dass sich die Lagercontainer bevorzugt von der Abpumpvorrichtung trennen lassen, kann eine Abpumpvorrichtung für eine grosse Anzahl an Lagercontainern genutzt werden. Auf diese Art lässt sich die Vorrichtung zur Vakuumkühlung gut nutzen, da zum Beispiel gekühlte Lebensmittel in Lagercontainern gehalten werden können und/oder in Lagercontainern in verschiedenen Stadien der Fertigstellung darauf warten können, weiter verarbeitet zu werden. Auch können in den Lagercontainern zum Beispiel noch ungebackene Rohlinge und/oder unverarbeitete Lebensmittel darauf warten, weiterverarbeitet zu werden und dann erst nach diesem Arbeitsschritt mit der Vakuumkühlung gekühlt werden. Es können aber auch in den Lagercontainern Lebensmittel gelagert werden, die auch nach späteren Verarbeitungsschritten keine Vakuumkühlung nötig haben. Auf diese Art und Weise können die Pumpen effizient genutzt werden, auch wenn in einem bestimmten Zeitraum keine Kühlung von Lebensmitteln nötig ist. Durch eine effiziente Lagerung in unterschiedlichen Fertigungsstadien der Lebensmittel, kann die Produktion von Lebensmitteln zeitlich besser an eine schwankende Nachfrage angepasst werden.

Die Lagercontainer können bevorzugt als "Buffer" oder Puffer in einem Produktionsprozess genutzt werden, in welchem Zwischenprodukte mit nur minimalen Qualitätsverlusten bis zu ihrer Weiterverarbeitung gelagert werden können. Die Lagercontainer sind bevorzugt Frischhaltekammern, in welchen sowohl ein Vorteig als auch Zwischen- und Endprodukte bis zur Weiterverarbeitung oder Konsumation so gelagert sind, dass eine Degradierung im Wesentlichen unterbrochen ist.

Da die Anforderungen an die Druckregulierung und die Tiefe des Unterdruckes in den Lagercontainern geringer sind, als es für die Vakuumkühlung in vielen Fällen erwünscht ist, können auch nur einzelne der Vakuumpumpen bzw. Teile der Abpumpvorrichtung zum Abpumpen der Lagercontainer genutzt werden.

In einer Ausführungsform wird mit Hilfe der Abpumpvorrichtung auch eine Schutzatmosphäre in den Lagercontainer eingebracht. So kann zum Beispiel der Lagercontainer zunächst mit Stickstoff gespült werden und dieser dann teilweise wieder bis zum gewünschten Unterdruck abgepumpt werden. Um Schutzgase zu sparen ist es aber auch möglich, zunächst in dem luftgefüllten Lagercontainer einen Unterdruck zu erzeugen und diesen dann nur teilweise, bevorzugt nach Trennung von der Abpumpvorrichtung, durch ein Schutzgas wieder aufzuheben. So geht kein Schutzgas durch einen Spülvorgang verloren, dafür ist der Anteil ursprünglicher Luft in dem Lagercontainer im Allgemeinen höher als wenn ein Spülvorgang genutzt wurde. Durch die Entfernung von Umgebungsluft aus dem Lagercontainer lassen sich zum Beispiel Oxidationsprozesse aufhalten.

Bevorzugt sind die Lagercontainer derart gestaltet, dass die Lebensmittel in ihnen auf Blechen und/oder Haltevorrichtungen liegen können, die sich nachher auch für die Vakuumkühlung eignen. Es soll also insbesondere kein Umschichten und/oder Umplatzieren der Lebensmittel zwischen Lagerung und Kühlung notwendig sein. Dies ermöglicht ein schnelles, hygienisches und einfaches Arbeiten.

Es ist aber auch möglich, dass die Lebensmittel lose oder mit anderen Haltevorrichtungen, die sich nicht für die Vakuumkühlung eignen, in den Lagercontainern platziert werden. Dies kann Platz in den Lagercontainern sparen und damit ihre Auslastung verbessern.

In einer Ausführungsform sind die Lagercontainer mit einem Rückschlagventil aber insbesondere ohne eigenen Anschluss an die Abpumpvorrichtung versehen. Ein solcher Lagercontainer lässt sich abpumpen, indem er geschlossen, aber noch mit Normaldruck in seinem Inneren in die Vakuumkammer der Vakuumkühlvorrichtung gestellt wird. Wird nun die Vakuumkammer der Vakuumkühlvorrichtung abgepumpt, so öffnet sich durch die Druckdifferenz im Inneren des Lagercontainers und seiner Umgebung (also dem Inneren der Vakuumkammer) das Rückschlagventil und der Lagercontainer wird abgepumpt. Nach erfolgtem Abpumpvorgang wird die Vakuumkammer belüftet. Da nun der Umgebungsdruck des Lagercontainers grösser ist als der Druck in seinem Inneren, schliesst sich das Rückschlagventil und der Unterdruck im Inneren des Lagercontainers wird erhalten. Der Lagercontainer kann dann aus der Vakuumkühlvorrichtung entnommen werden.

In einer weiteren Ausführungsform umfasst die Vakuumkühlvorrichtung für Lebensmittel weiter eine Aufnahme für Vorteig, welche eine Vorteigsteuerung umfasst, mit welcher eine Innentemperatur der Aufnahme für Vorteig in Abhängigkeit von einem Messwert einer pH-Wert-Messvorrichtung, eingestellt werden kann. Die Aufnahme für Vorteig ist dabei als Vakuumkammer ausgebildet und insbesondere weiter dazu geeignet, den Unterdruck zu halten, welcher durch die Abpumpvorrichtung im Inneren der Aufnahme für Vorteig erzeugbar ist.

In einem Vorteig, insbesondere in einem Vorteig für Brot, sollen Hefe und Milchsäurebakterien und gegebenenfalls andere Mikrolebewesen und/oder chemische Stoffe in einem gewünschten Gleichgewicht gehalten werden. Dazu wird insbesondere der pH-Wert des Vorteiges gemessen und die Temperatur des Teiges entsprechend dieses Messwertes reguliert.

Die Innentemperatur der Aufnahme für Vorteig ist die Temperatur, die die Aufnahme für den Vorteig auf ihrer Innenseite hat. Die Innenseite ist dabei die Seite der Aufnahme, die mit dem Vorteig in Kontakt gerät. Somit kann die Vorteigtemperatur über die Regelung der Innentemperatur der Aufnahme für Vorteig reguliert werden.

Die Innentemperatur der Aufnahme für Vorteig kann zum Beispiel über Kühlschleifen reguliert werden. Wenn die Aufnahme für Vorteig als Vakuumkammer ausgebildet ist, kann der Vorteig in der Aufnahme für den Vorteig auch unter Vakuum gelagert werden, bis er weiterverarbeitet werden soll. Auch in dieser Lagerphase unter Unterdruck, kann die Innentemperatur weiter reguliert und insbesondere tief gehalten werden. So lässt sich insbesondere ein Zeitfenster zwischen Herstellung des Vorteiges und Verarbeitung des Vorteiges vergrössern, und dies lässt dem Bäcker und/oder dem lebensmittelverarbeitenden Betrieb mehr Spielraum immer frische Backwaren zur Verfügung zu stellen. Langfristige und damit tendenziell ungenaue Prognosen werden damit weniger wichtig, da der Herstellungsprozess spontan und ohne wesentliche Nachteile verlängert werden kann.

Wenn die Aufnahme für Vorteig derart ausgebildet ist, dass sie den Unterdruck, der durch die Abpumpvorrichtung in ihr erzeugt wird, halten kann, so kann die Abpumpvorrichtung während der Lagerzeit des Vorteiges unter Unterdruck zum Abpumpen anderer Vorrichtungen, zum Beispiel von Vakuumkammern zur Lebensmittelkühlung und/oder Lagercontainern, genutzt werden, und die Leistung reduziert sich für die anderen Anwendungen nicht. Bei den anderen Anwendungen kann es sich insbesondere um die Vakuumkühlung handeln. Auf diese Art kann ein Abpumpsystem effizient und wirtschaftlich eingesetzt werden und den momentanen Bedürfnissen des Produktionsprozesses optimal dienen.

In einer weiteren Ausführungsform umfasst die Aufnahme für Vorteig Kühlschleifen, in welchen ein Kühlmittel mit einer von der Vorteigsteuerung regulierten Kühlmitteltemperatur zirkulieren kann.

Die Vorteigsteuerung kann unabhängig sein von der Steuerung der Abpumpvorrichtung beziehungsweise der Vakuumkühlvorrichtung. Die Vorteigsteuerung reguliert insbesondere die Innentemperatur der Aufnahme für den Vorteig in Abhängigkeit der Ergebnisse einer pH-Wert-Messvorrichtung. Weiter kann die Vorteigsteuerung auch den Druck innerhalb der Aufnahme für den Vorteig regulieren beziehungsweise diesen Druck steuern.

Die Steuerung von dem Druck innerhalb der Aufnahme für Vorteig erfolgt insbesondere durch mindestens ein Ventil, welches sich in dem aufnahmeseitigen Anschlussteil für die Abpumpvorrichtung befindet. Weiter ist es auch bevorzugt möglich, dass sich mindestens ein Ventil zur Druckregulierung den Druckunterschied zwischen Aufnahme für den Vorteig und Abpumpvorrichtung an einer anderen Stelle ihrer Verbindung reguliert. Weiter kann alternativ oder in Ergänzung zu einer Ventillösung auch die Leistung der Abpumpvorrichtung reguliert werden. Eine Druckregulierung kann auch durch gezielte Unterbrechung beziehungsweise Herstellung einer Verbindung zwischen Aufnahme für den Vorteig und Abpumpvorrichtung erreicht werden und/oder dadurch, dass die Anzahl und/oder Grösse dieser mindestens einen Verbindung geeignet gewählt wird. Alle diese Druckregulierungssysteme können auch miteinander kombiniert werden. Die Abpumpvorrichtung kann dauerhaft an der Aufnahme für den Vorteig befestigt sein und nur durch Ventile und/oder Verschlüsse mit dieser fluiddicht verbunden oder getrennt werden. Es ist aber auch möglich, dass eine manuelle Umrüstung notwendig ist, um die Abpumpvorrichtung mit der Aufnahme für den Vorteig zu verbinden. So ist es zum Beispiel möglich, dass ein Benutzer ein Rohr an der Abpumpvorrichtung, an einer mit der Abpumpvorrichtung verbundenen Leitung und/oder an der Aufnahme für den Vorteig verbinden muss um die Verbindung herzustellen.

Die Kühlung innerhalb der Aufnahme für den Vorteig läuft bevorzugt insbesondere teilweise durch in Kühlschleifen zirkulierendes Kühlmittel. Eine Kühlung allein mit Unterdruck könnte den Mikroorganismen in dem Vorteig schaden. Indem die Vorteigsteuerung bevorzugt die Kühlmitteltemperatur reguliert, kann die Vorteigsteuerung die Innentemperatur der Aufnahme für den Vorteig steuern. Die Steuerung der Kühlmitteltemperatur kann durch Mischung von Kühlmittel mit unterschiedlichen Temperaturen geschehen und/oder durch eine gezielte Kühlung beziehungsweise Erwärmung des Kühlmittels. Bei dem Kühlmittel kann es sich um Wasser handeln, aber auch um andere übliche Kühl- oder Wärmemittel.

Alternativ oder ergänzend kann die Steuerung eines Unterdruckes in der Aufnahme für den Vorteig auch durch die Steuerung der Vakuumkühlvorrichtung geschehen. Insbesondere wenn die Steuerung des Unterdruckes an ein Bauteil gehört, welches auch zu anderen Zwecken als nur für die Aufnahme für den Vorteig genutzt werden kann, kann es nützlich sein, diese Steuerungsfunktion der Steuerung der Vakuumkühlvorrichtung zu überlassen. Steuerbare Bauteile zur Druckregulierung, welche nicht ausschliesslich für die Aufnahme des Vorteiges genutzt werden können, sind zum Beispiel eine Leistungsregelung der Abpumpvorrichtung und/oder ein Ventil in einer Verbindung an der auch andere Sachen wie zum Beispiel Lagercontainer angeschlossen werden können.

Bevorzugt wird die Steuerung des Unterdruckes in der Aufnahme für den Vorteig derart realisiert, dass nur die Vakuumleitung zwischen Aufnahme für den Vorteig und Abpumpvorrichtung mechanisch hergestellt werden muss. Die Steuerung kann also entweder Teil der Aufnahme für den Vorteig sein, wobei dann die Aufnahme für den Vorteig auf einen Drucksensor und eine Druckregelungsmöglichkeit aufweist. Oder die Steuerung der Vakuumkühlvorrichtung wird benutzt, wobei der Druck dann auf der Abpumpvorrichtungsseite der Verbindung zwischen Abpumpvorrichtung und Aufnahme für den Vorteig liegt. Oder die Steuerung der Vakuumkühlvorrichtung wird benutzt und der Druck wird im Inneren der Aufnahme für den Vorteig gemessen, aber diese Messergebnisse werden kabellos und/oder über eine ständig bestehende Verbindung an die Steuerung weitergegeben. Die Druckregulierungsmöglichkeit liegt dann auf der Seite der Steuerung der Vakuumkühlvorrichtung. Mit einer drahtlosen und/oder einer ständig bestehenden Verbindung ist es auch möglich, dass die Druckregulierungsmöglichkeit auf der Seite der Aufnahme liegt, aber dennoch von einer Steuerung angesprochen wird, die sich auf der Abpumpvorrichtungsseite befindet.

In einer weiteren bevorzugten Ausführungsform umfasst die Vakuumkühlvorrichtung Waschdüsen, insbesondere in Kombination mit einer Kondenswasseraufnahme. Die Waschdüsen sind dabei dazu geeignet, ein Waschmittel, insbesondere eine lebensmitteltaugliche Lauge und/oder Wasser, derart in der Vakuumkammer zu verteilen, sodass die Innenseiten eines Raumes der Vakuumkammer, welcher die Lebensmittel zur Kühlung aufnehmen kann, wenigstens teilweise mit dem Waschmittel, insbesondere mit der Lauge und/oder dem Wasser, benetzt werden können.

Bevorzugt können die Innenseiten des Raumes der Vakuumkammer, welcher die Lebensmittel zur Kühlung aufnehmen kann, vollständig mit dem Waschmittel, insbesondere mit der Lauge und/oder dem Wasser, benetzt werden.

Die Kondenswasseraufnahme ist bevorzugt dazu geeignet, das Waschmittel, also insbesondere die Lauge und/oder das Wasser, welches durch die Waschdüsen verteilt werden kann, aufzunehmen.

So kann die Vakuumkammer zur Aufnahme von Lebensmitteln bequem gereinigt werden.

Weiter sind bevorzugt die Waschdüsen derart angeordnet und ausgestaltet, dass mindestens ein Blech, welches in dem Raum der Vakuumkammer, welche Lebensmittel zur Kühlung aufnehmen kann, platziert wird, von dem Waschmittel, insbesondere von der Lauge und/oder dem Wasser, benetzt werden kann.

Eine derartig ausgestaltete Kühlvorrichtung erlaubt eine automatische Reinigung sowohl der Vakuumkammer als auch des Bleches.

Die Kondenswasseraufnahme, die bevorzugt im unteren Bereich der Vakuumkammer angeordnet ist, kann dabei nicht nur zur Aufnahme von Kondenswasser genutzt werden, sondern gleichzeitig auch zum Abtransport des Waschwassers bzw. der Waschlauge. Die Waschdüsen können insbesondere bei Umgebungsdruck innerhalb der Vakuumkammer eingesetzt werden, und nicht bei Unterdruck. Allerdings kann ein im Anschluss an einen Waschprozess, also im Anschluss an die Nutzung der Waschdüsen, hergestellter Unterdruck dazu dienen, die Vakuumkammer schnell wieder zu trocknen.

Bei den Blechen handelt es sich um Bleche zur Aufnahme der Lebensmittel. Es handelt sich also insbesondere um im Wesentlichen flache und stabile Gegenstände, auf denen sich die Lebensmittel anordnen und die in entsprechende Vorrichtungen und Halterungen gesetzt und/oder geschoben werden können. Lassen sich die Bleche ebenfalls mit den in der Vakuumkühlvorrichtung vorgesehenen Waschdüsen reinigen, so vereinfacht und beschleunigt dies den Produktionsprozess zusätzlich.

Die Bleche können bevorzugt für die Reinigung entweder in der Lage in der Vakuumkammer platziert in der sie auch die Lebensmittel tragen, oder sie können in einer anderen Lage in der Vakuumkammer platziert werden. So liegen die Bleche zum Beispiel im Allgemeinen horizontal um Lebensmittel zu halten, könnten aber für die Reinigung in eine im Wesentlichen vertikale Lage gebracht werden und/oder in einem gewissen Winkel zur Horizontalen sein.

Die Nutzung einer lebensmitteltauglichen Lauge und/oder Wasser ist daher vorteilhaft, da diese Reinigungsmittel lebensmitteltauglich sind und man somit selbst dann, wenn Lebensmittel mit dem Waschmittel in Kontakt kommen sollten, keine Gesundheitsschäden befürchten muss.

Die Kondenswasseraufnahme umfasst bevorzugt auch ein Abwasserrohr, durch welches überschüssiges Kondenswasser abgeleitet werden kann. Diese Ableitung und ebenso die Kondenswasseraufnahme sind bevorzugt derart gestaltet, dass eventuell vorkommende Mehl- und/oder Teigablagerungen oder andere Lebensmittelreste und/oder Niederschläge wie zum Beispiel Fette, Salze und ähnliches, die von dem Waschmittel in die Kondenswasseraufnahme getragen werden und/oder die sich im normalen Gebrauch dorthin begeben könnten, dort keinen Schaden anrichten. Es befindet sich daher insbesondere ein Sieb und/oder Filter vor dem Abflussrohr, und dieses Sieb und/oder dieser Filter sind insbesondere so angeordnet, dass ein Nutzer sie einfach erreichen und bei Bedarf leeren kann. Ausserdem ist das Material von Kondenswasseraufnahme und Ableitung sowie anderer Bauteile die mit dem Waschwasser in Kontakt kommen derart gewählt und/oder geschützt, dass Korrosionsschäden vermieden werden.

Weiter wird bevorzugt der Füllstand dieses Siebes und/oder des Filters und die Effizienz des Ablaufes von Kondenswasser durch die Steuerung der Vakuumkühlvorrichtung überwacht und insbesondere ein Alarmsignal ausgelöst, wenn der Filter verstopft zu sein scheint und/oder die Ablaufmenge unerwartet gering ist. Diese Überwachungsfunktion muss nicht zwingend von der Steuerung der Vakuumkühlvorrichtung übernommen werden. Es ist auch eine mechanische Anzeige denkbar und/oder ein eigenes unabhängiges Überwachungssystem. Es kann auf eine Überwachung auch verzichtet werden und der Benutzer beobachtet beispielsweise den Füllstand der Kondenswasseraufnahme. Um dies zu erleichtern, kann zum Beispiel ein Schwimmer an einer geeigneten Stelle, zum Beispiel in einem Sichtfenster, positioniert sein.

In einer weiteren bevorzugten Ausführungsform umfasst die Vakuumkühlvorrichtung Pumpenkühlmittelkühlschleifen, die durch die Kondenswasseraufnahme der Vakuumkammer führen und die Pumpenkühlmittel der Abpumpvorrichtung aufnehmen und/oder leiten können.

Die Abpumpvorrichtung produziert in vielen Ausführungsformen neben dem gewünschten Unterdruck auch Abwärme, und diese Abwärme sollte abgeführt werden. Dazu wird bevorzugt eine Wasserkühlung verwendet und/oder eine andere Art Kühlung mit einem Kühlmittel. Dieses Kühlmittel wird hier Pumpenkühlmittel genannt. Um dieses Pumpenkühlmittel zu kühlen, gibt es unterschiedliche Möglichkeiten. Zum einen kann einfach Leitungswasser genommen werden, was nach dem Durchlauf durch den Kühlkreislauf der Pumpen wieder in das Abwasser gegeben wird. Das führt allerdings zu einem hohen Wasserverbrauch, der sich wirtschaftlich ungünstig auswirkt. Günstiger ist es daher, wenn das Pumpenkühlmittel gekühlt und erneut zum Wärmeabtransport verwendet werden kann. Damit ist auch die Nutzung von effizienteren Kühlmitteln als Wasser möglich. Um das Pumpenkühlmittel zu kühlen, kann nun teilweise die Vakuumkühlung eingesetzt werden. Dazu wird das Pumpenkühlmittel in Kühlschleifen durch die Kondenswasseraufnahme geleitet. Die Kondenswasseraufnahme befindet sich in einem Unterdruckbereich der Vakuumkammer, das heisst, dass auch das Kondenswasser teilweise wieder verdampft, wenn der Druck in der Vakuumkammer sinkt. Das Kondenswasser wird auf diese Art und Weise gekühlt. Dieser Kühlmechanismus wird nun teilweise auch genutzt, um das Pumpenkühlmittel zu kühlen.

Ob und wieweit eine derartige Kühlung des Pumpenkühlmittels in der Vakuumkammer sinnvoll und hilfreich ist, bestimmt sich an der Leistung der benutzten Pumpen und der Leistung, die ansonsten für andere Vakuumkammern benötigt wird. Insbesondere ist es hier entscheidend in welchem Verhältnis die gewünschte Pumpleitung zur erzeugten Abwärmeleistung steht. Da dieses Verhältnis bei vielen Abpumptechniken auch von dem Druck in der Vakuumkammer abhängt, kann es vorteilhaft sein, die Kühlung des Pumpenkühlmittels in den Vakuumkammern auch nur bei bestimmten Drücken im Inneren der Vakuumkammer zu nutzen. In vielen Fällen dürften weitere Kühlmethoden für das Pumpenkühlmittel nötig sein, wie zum Beispiel Wärmetauscher und/oder längere Leitungen durch kühlere Räume, wie zum Beispiel die Aussenluft. Je nachdem können auch die Kühlkreisläufe der Pumpen und die Temperatursteuerung der Aufnahme für den Vorteig und/oder Klimasysteme von Lager- und/oder Verkaufs- und/oder Arbeitsräumen aufeinander abgestimmt werden, sodass entsprechende Wärmequellen und/oder Kältesenken effizient genutzt werden können und über die entsprechenden Kühl- bzw. Wärmekreisläufe die Energie so verteilt wird, dass sie möglichst effizient genutzt wird.

In einer weiteren vorteilhaften Ausführungsform umfasst die Vakuumkammer eine Tür, einen Türrahmen und einen mit Druck beaufschlagbaren Dichtungsschlauch sowie eine Türsteuerung.

Der mindestens eine Dichtungsschlauch ist an der Tür und/oder an dem Türrahmen angeordnet. Insbesondere ist er in einer Aufnahme angeordnet, und zwar so, dass zwischen der Tür und dem Türrahmen eine luftdichte Dichtung besteht, wenn der Dichtungsschlauch in seinem Inneren einen festgelegten Überdruck hält und die Tür geschlossen ist.

Die Türsteuerung umfasst dabei bevorzugt eine Steuereinheit, die ein Unter-Druck-Setzen des Dichtungsschlauches veranlassen kann und bevorzugt dies auch automatisch veranlasst, wenn die Tür geschlossen ist.

Das in dieser Vorrichtung auch mögliche Vakuumpulsierungsverfahren beschädigt und/oder belastet viele übliche Dichtungen, die in üblichen Dichtungsverfahren für Vakuumsysteme eingesetzt werden, stark. Dies ist der Fall, da die Vakuumpulsierung zu starken Druckänderungen und starken Druckgradientenänderungen zwischen Innen- und Aussenraum führt. Kleine Fehlstellen in der Dichtung führen häufig dazu, dass eine Dichtung anfängt zu flattern, das heisst die Dichtung wird abwechslungsweise in die Kammer hinein gesaugt und wieder losgelassen. Eine derartige mechanische Belastung an Schwachstellen führt dazu, dass viele Dichtungen vergleichsweise schnell versagen. Gleichzeitig sollte in einem Lebensmittelbetrieb aber ein zügiges Tempo der Türschliessung und Abdichtung möglich sein. Ausserdem ist beim Umgang mit Lebensmitteln damit zu rechnen, dass Staub und Unreinheiten und/oder Stücke von Lebensmitteln in den Bereich der Dichtung gelangen können und diese nicht vor jeder Türschliessung penibel gesäubert werden kann. Eine Dichtung mit Dichtungsschlauch, in welchem sich ein Überdruck befindet, löst diese Probleme. Ein solcher, unter Druck stehender Dichtungsschlauch, lässt Beschädigungen klar erkennen, da er dann den Druck nicht halten kann und es kann dann eine entsprechende Warnung gegeben werden.

Weiter führt der Druck von dem Dichtungsschlauch dazu, dass er sich auch gewissen Unreinheiten und Ungleichmässigkeiten in den Aufnahmen anpasst. Durch die Füllung mit einem Gas beziehungsweise mit einem Fluid wird ausserdem sichergestellt, dass der Anpressdruck zwischen Schlauch und Umgebung, also seiner Aufnahme beziehungsweise allem was sich innerhalb der Aufnahme befindet, auf der ganzen Aussenseite des Schlauches gleichmässig ist. Ein gleichmässiger Anpressdruck über die gesamte Fläche der Dichtung erlaubt ein gleichmässiges Dichtungsergebnis auf der gesamten Länge, auch wenn Verschmutzungen vorliegen. Da der Dichtungsschlauch bei geöffneter Tür relativ wenig Platz wegnimmt, können die Scharniere derart gestaltet sein, dass die Tür sich an einer Seite zuerst schliesst, bevor sie es auf der anderen Seite tut. Andere Vakuumdichtungen würden durch eine derartige Schliessung einseitig stark belastet und damit eher kaputtgehen. Trotzdem ist es durchaus denkbar, andere Dichtungen zu verwenden zum Beispiel mit Türen, die parallel schliessen. Mit einer parallelen Schliessung ist hier gemeint, dass die Tür sich dem Türrahmen auf ihrem ganzen Umfang gleichmässig nähert. Eine solche andere Dichtung hat den Vorteil, dass keine weitere Steuereinheit und kein Kompressor benötigt wird, der die Dichtung aufblasen und/oder anders unter Druck setzen kann.

Die Türsteuerung und die Steuereinheit zur Erzeugung des Druckes im Dichtungsschlauch können in die Steuerung der Vakuumkühlvorrichtung mit aufgenommen sein. Es kann sich aber auch um eine spezielle Steuerung handeln. Die Steuerung kann eine elektrische Steuerung sein, es kann sich aber auch um eine mechanische Steuerung handeln, die zum Beispiel den Anpressdruck und/oder die Bewegung der Tür zunutze macht, um den Dichtungsschlauch entsprechend zu befüllen. Die Türsteuerung kann auch die Tür-schliessung und/oder -öffnung selbst mit Hilfe von Elektromotoren oder auf anderem Wege, zum Beispiel mit Federn, fördern, erleichtern oder automatisch durchführen.

Der Dichtungsschlauch kann mit Umgebungsluft befüllt werden. Es kann sich aber auch um spezielles Gas handeln und/oder auch um eine Flüssigkeit. Insbesondere handelt es sich um einen hydraulischen Schlauch. Bevorzugt wird der Dichtungsschlauch mit Umgebungsluft gefüllt.

Die Aufnahme für den aufblasbaren Dichtungsschlauch ist bevorzugt derart gestaltet, dass der Dichtungsschlauch sich im Normalgebrauch nicht aus der einen Hälfte der Aufnahme entfernt. Gleichzeitig sollten die Aufnahme und/oder der Dichtungsschlauch aber derart gestaltet sein, dass der Dichtungsschlauch sich austauschen lässt. Es ist aber zum Beispiel möglich, dass Werkzeuge benötigt werden, um den Dichtungsschlauch für den Wechsel aus der Aufnahme zu entfernen und um ihn wieder in die Aufnahme einzubringen.

In einer weiteren bevorzugten Ausführungsform umfasst die Vakuumkühlvorrichtung für Lebensmittel eine öl-freie Vakuumpumpe und/oder einen Seitenkanalverdichter.

Dabei wird der Seitenkanalverdichter bevorzugt dazu verwendet, den Druck in einer Vakuumkammer und/oder in einem Lagerbehälter und/oder in einem Unterdruckspeicher und/oder in einer Vorteigaufnahme auf einen Druck von unter 500 mbar, bevorzugt bis unter 200 mbar, zu senken. Für tiefere Drücke wird bevorzugt die Vakuumpumpe eingesetzt. Auch können beide Anlagen parallel genutzt werden. Alternativ kann auch nur eine Vakuumpumpe eingesetzt werden, eine Kombination aus zwei Vakuumpumpen und/oder mehreren Seitenkanalverdichtern.

Es ist von Vorteil, spezielle Vakuumerzeugungstechniken für unterschiedliche Druckbereiche zu verwenden, da so die unterschiedlichen Techniken in ihrem optimalen Wirkungsbereich operieren können. Dies verlängert die Lebenszeit und reduziert die Betriebskosten. Gleichzeitig kann es aber auch von Vorteil sein, nur einzelne Vakuumerzeugungsvorrichtungen zu haben, da dies Kosten in der Anschaffung spart und die Komplexität der Gesamtanlage abnimmt. Ausserdem wird die Steuerung vereinfacht, wenn es sich um weniger Geräte handelt. Durch eine bevorzugte geschickte Nutzung von Unterdruckspeichern und verschiedenen Vakuumkammern kann sichergestellt werden, dass die unterschiedlichen Abpumpvorrichtungen und/oder die Abpumpvorrichtung als Ganzes effizient genutzt wird und nur selten hoch- und heruntergefahren werden müssen. Die Nutzung von Unterdruckspeichern erlaubt auch mehr Flexibilität bei der Wahl der Pumpenleistung, da nicht zwingend die Pumpe einen schnellen Druckabfall ermöglichen können muss, sondern stattdessen einen Unterdruckspeicher über eine längere Zeit leert und der Druckausgleich zwischen Unterdruckspeicher und Vakuumkammer dann einen schnellen Druckabfall ermöglicht.

In einer weiteren Ausführungsform umfasst die Vakuumkühlvorrichtung eine Rohstoffkühlung. Diese dient insbesondere dazu, Rohstoffe gezielt zu kühlen, beispielsweise bevor sie in einem weiteren Verarbeitungsschritt, z.B. einem Backprozess, eingesetzt werden. Die Rohstoffkühlung besitzt insbesondere eine trichterförmige Auslassöffnung und/oder ist mit Vorteil vakuumdicht verschliessbar. Sie verfügt über mindestens einen Anschluss für eine Verbindung mit der Abpumpvorrichtung, die es erlaubt, mit der Abpumpvorrichtung einen Unterdruck im Inneren der Rohstoffkühlung zu erzeugen. Die Steuerung der Vakuumkühlvorrichtung und/oder eine Rohstoffkühlungssteuerung ist bevorzugt derart ausgebildet, dass der Unterdruck im Inneren der Rohstoffkühlung kontrolliert erzeugt werden kann. Die Steuerung der Vakuumkühlvorrichtung und/oder die Rohstoffkühlungssteuerung wirkt dabei bevorzugt auf Ventile, welche eine Verbindung zwischen der Abpumpvorrichtung und dem Inneren der Rohstoffkühlung reduzieren und/oder unterbrechen können und/oder auf Ventile die eine Belüftung des Inneren der Rohstoffkühlung ermöglichen.

Die Rohstoffkühlung kann insbesondere eine gewisse Menge Mehl oder einen anderen Rohstoff, bevorzugt bis zu 500 kg, insbesondere 100 - 500 kg, besonders bevorzugt etwa maximal 300 kg, insbesondere 200 - 275 kg, speziell bevorzugt 250 kg, aufnehmen. Durch eine trichterförmige Auslassöffnung kann das Mehl oder ein anderer Rohstoff direkt und kontrolliert entnommen werden, bevorzugt um einen Teig zuzubereiten.

Weiter umfasst die Rohstoffkühlung einen Anschluss für eine Verbindung mit der Abpumpvorrichtung. Dieser Anschluss ist bevorzugt ein üblicher Anschluss für Unterdruckleitungen. Bevorzugt handelt es sich um einen Flansch, der mit einem Schnellverschluss versehen ist. Es kann sich aber auch um eine weniger schnell lösbare Verbindung wie eine Dichtung mit einer Vielzahl von Schrauben oder eine permanente Verbindung wie beispielsweise eine Lötstelle oder Schweissstelle handeln. Damit die Abpumpvorrichtung einen Unterdruck im Inneren der Rohstoffkühlung erzeugen kann, sollte eine im Wesentlichen vakuumdichte Verbindung zwischen der Abpumpvorrichtung und dem Inneren der Rohstoffkühlung herstellbar sein. Bevorzugt befinden sich zumindest ein Ventil und/oder eine Absperrmöglichkeit entlang dieser Verbindung. So kann die Rohstoffkühlung einfach vom Unterdrucksystem der Abpumpvorrichtung getrennt werden.

Bevorzugt lässt sich die Unterdruckerzeugung im Inneren der Rohstoffkühlung kontrollieren und/oder steuern. Bevorzugt folgt der Druckverlauf im Inneren der Rohstoffkühlung einer geeigneten Solldruckkurve. In einer Ausführungsform wird der Druckverlauf im Inneren der Rohstoffkühlung von der Steuerung der Vakuumkühlvorrichtung, welche auch den Druckverlauf im Inneren der Vakuumkammer steuert, gesteuert. In einer anderen Ausführungsform wird der Druckverlauf im Inneren der Rohstoffkühlung von einer Rohstoffkühlungssteuerung gesteuert. In einer weiteren Ausführungsform wirken diese beiden Steuerungen zusammen und/oder sind ineinander integriert. Die Steuerung und/oder die Rohstoffkühlungssteuerung steuert den Druck im Inneren der Rohstoffkühlung dabei insbesondere indem die Leistung der Abpumpvorrichtung, die Nutzung der Abpumpvorrichtung, Ventile in der Verbindung zwischen der Abpumpvorrichtung und dem Inneren der Rohstoffkühlung, und/oder Ventile zur Belüftung des Inneren der Rohstoffkühlung gesteuert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

| | |
|---|---|
| Fig. 1 | Vorrichtung zur Kühlung von Lebensmitteln |
| Fig. 2a,b | Zwei unterschiedliche Angabemöglichkeiten für atmosphärische Bedingungen |
| Fig. 3 | Beispiele für Solldruckkurven |
| Fig. 4 | Vorrichtung zur Kühlung von Lebensmitteln mit mehreren verbundenen Vakuumkammern |
| Fig. 5 | Vorrichtung zur Kühlung von Lebensmitteln mit Unterdruckspeicher |
| Fig. 6 | Vakuumkammer mit Waschdüsen |
| Fig. 7 | Lagercontainer für Lebensmittel |
| Fig. 8 | Aufnahme für Vorteig der Vakuumvorrichtung |
| Fig. 9 | Möglichkeit zur teilweisen Kühlung von Kühlmittel der Abpumpvorrichtung. |
| Fig. 10 a,b,c | Dichtungssystem einer Vakuumkammer mit einem Dichtungsschlauch. |

Grundsätzlich sind in den Figuren gleiche Teile mit gleichen Bezugszeichen versehen.

## Wege zur Ausführung der Erfindung

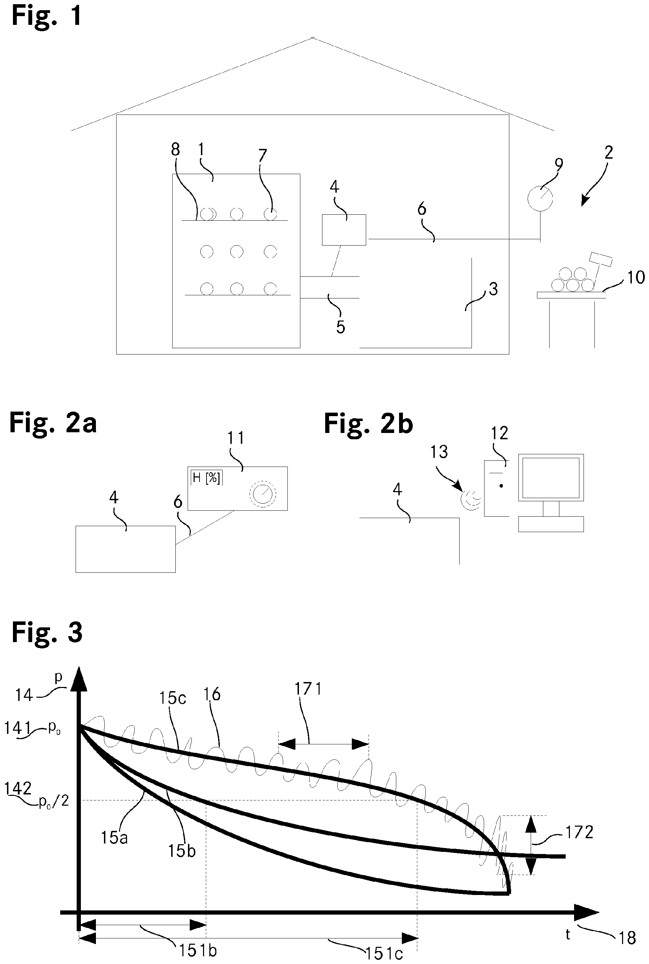

Fig. 1 zeigt eine erfindungsgemässe Vorrichtung zum Kühlen von Lebensmitteln.

Eine Vakuumkammer 1 ist mit Lebensmittel 7 gefüllt. Diese befinden sich auf Blechen 8. Die Vakuumkammer 1 ist über eine Vakuumleitung 5 mit einer Abpumpvorrichtung 3 verbunden. Die Abpumpvorrichtung 3 und/oder die Ventile in der Vakuumleitung 5 werden über eine Steuerung 4 gesteuert. Die Steuerung 4 enthält Daten von den atmosphärischen Bedingungen in einem externen Bereich 2. Diese atmosphärischen Bedingungen werden zum Beispiel mit einem Sensor 9 direkt im externen Bereich 2 gemessen. Der externe Bereich 2 ist ein Bereich, in dem die Lebensmittel 7 eine gleichmässige Temperatur annehmen. Dies kann zum Beispiel ein Verkaufsstand 10 sein. Die Daten des Sensors 9 für atmosphärische Bedingungen am externen Ort 2 werden über eine Datenleitung 6 an die Steuerung 4 der Abpumpvorrichtung 3 weitergeleitet.

Fig. 1 zeigt den externen Bereich 2 ausserhalb eines Gebäudes. Dies muss aber nicht der Fall sein. Der externe Bereich 2 kann zum Beispiel auch innerhalb eines Gebäudes oder eines Fahrzeuges liegen.

Figuren 2a und 2b zeigen unterschiedliche Angabemöglichkeiten für die externen atmosphärischen Bedingungen.

Fig. 2a zeigt beispielhaft eine manuelle Eingabevorrichtung 11 mit einem Drehschalter. An diesem Drehschalter kann zum Beispiel ein Wert der Luftfeuchtigkeit eingestellt werden, der im externen Bereich 2 erwartet wird und/oder dort gemessen wurde. Eine Datenleitung 6 führt wiederum von der Eingabevorrichtung 11 zur Steuerung 4.

Fig. 2b zeigt beispielhaft eine weitere Möglichkeit zur Angabe von atmosphärischen Bedingungen. Hier werden die atmosphärischen Bedingungen von einem Computer 12 berechnet und über eine drahtlose Datenübertragung 13 an die Steuerung 4 übertragen. Selbstverständlich lassen sich die unterschiedlichen Methoden zur Erfassung der externen atmosphärischen Bedingungen, die in den Fig. 1, 2a und 2b gezeigt sind, miteinander kombinieren beziehungsweise austauschen. Es ist also zum Beispiel möglich, dass, wie in Fig. 1 gezeigt, ein Sensor 9 Daten misst und dann mit einer drahtlosen Verbindung 13, wie in Fig. 2b gezeigt, an die Steuerung 4 überträgt. Weiter ist es möglich, dass die Steuerung, anders als in Fig. 1 gezeigt, nicht ein Ventil in der Vakuumleitung 5 steuert, sondern auf die Abpumpvorrichtung 3 wirkt und zum Beispiel deren Leistung reguliert. Die Steuerung 4 kann auch beides beeinflussen, sowohl ein Ventil innerhalb der Vakuumleitung 5 als auch die Leistung einer Abpumpvorrichtung 3. Die Steuerung 4 kontrolliert die Abpumpvorrichtung 3 beziehungsweise die Vakuumleitung 5 derart, dass in der Vakuumkammer 1 der Druck im Wesentlichen einer Solldruckkurve 16 folgt. Diese Solldruckkurve 16 ist dabei entweder in der Steuerung 4 hinterlegt, und kann dort unter Nutzung der angegebenen atmosphärischen Bedingungen gewählt und/oder berechnet werden. Auch können Solldruckkurven 16 auf einem Speichermedium vorliegen und/oder der Steuerung über eine andere Datenverbindung zur Verfügung gestellt werden. Solldruckkurven 16 können in der Form von Kurven, also als Datenpaare "Zeit" und "Druck" und/oder als funktionale Zusammenhänge und/oder als Berechnungsalgorithmen gespeichert sein. In jedem Fall sind ihre Auswahl und/oder ihre Gestaltung aber zumindest teilweise durch den angegebenen Wert der atmosphärischen Bedingung am externen Ort beeinflusst.

Fig. 3 zeigt eine Solldruckkurve 16 und drei Beispiele für mittlere Solldruckkurven 15a, 15b und 15c. Die mittleren Solldruckkurven 15a, 15b und 15c stellen dabei den mittleren Druckabfall über die Zeit dar.

Das Diagramm in Fig. 3 hat zwei Achsen. Auf der X-Achse ist eine Zeit 18 aufgetragen und auf der Y-Achse ist ein Solldruck im Inneren der Vakuumkammer 14 aufgetragen. Der Anfangsdruck in der Vakuumkammer ist jeweils gleich dem Umgebungsdruck $p_0$ 141. Ein weiterer Druckwert auf der Achse ist eingezeichnet, dies ist der halbe Umgebungsdruck $p_0/2$ 142.

Am Anfang des Abpumpvorgangs befindet sich in der Vakuumkammer der Umgebungsdruck $p_0$ 141 da beim Beladen und Entladen der Vakuumkammer 1 ein Druckausgleich mit der Umgebung stattfindet. Während der mittlere Druck im Laufe der Zeit in den hier gezeigten Beispielen kontinuierlich abnimmt, werden die mittleren Solldruckkurven 15a, 15b und 15c überlagert von einer Vakuumpulsierung. Diese ist als dünne Linie erkennbar und ergibt zusammen mit der mittleren Solldruckkurve 15c die detaillierte Solldruckkurve 16. Die Vakuumpulsierung kann beschrieben werden durch eine zeitlich veränderliche Frequenz und eine zeitlich veränderliche Amplitude 172. Die mittlere Solldruckkurve kann durch eine Druckabfallzeit 151b, c charakterisiert werden.

Fig. 3 zeigt, wie diese Parameter bestimmt werden können. So geschehen in der Zeitlänge 117 drei Wellenlängen der Vakuumpulsierung. Die Frequenz der Vakuumpulsierung zu diesem Zeitpunkt ist der Kehrwert dieser Zeitlänge 117. Die Amplitude 172 der Vakuumpulsierung zu einem anderen Zeitpunkt ist ebenfalls in Fig. 3 gezeigt. In dem gezeigten Beispiel ändern sich sowohl Frequenz als auch Amplitude der Vakuumpulsierung mit der Zeit.

Die mittlere Solldruckkurve 15a, b, c kann beispielsweise durch die Druckabfallzeit 151 b, c charakterisiert werden. Die Druckabfallzeit 151 b, c kann zum Beispiel als die Zeit definiert werden, in der die Hälfte von dem Normaldruck $p_0$ 142 erreicht wird. Diese Zeit ist für die mittleren Solldruckkurven 15b und 15c in Fig. 3 eingezeichnet. Es ist die Zeit, die von Pumpbeginn, bis zu dem Zeitpunkt vergeht, an dem die jeweilige mittlere Solldruckkurve 15b, c den Wert von einem halben Atmosphärendruck $p_0/2$ 142 unterschreitet. Die so definierte Druckabfallzeit ist in Fig. 3 mit Pfeilen bezeichnet, die die Bezugszeichen 151b und 151c tragen.

Aus Fig. 3 wird offensichtlich, dass eine solche Charakterisierung der mittleren Druckabfallkurven 15a, 15b, 15c nur dann mit einem einzigen Parameter, wie beispielsweise der Druckabfallzeit 151b, 151c sinnvoll ist, wenn der Kurventyp vorher festgelegt wurde. So sind zum Beispiel die Kurven 15a und 15b zueinander ähnlich und können damit durch eine unterschiedliche Druckabfallzeit 151b charakterisiert werden. Die mittlere Solldruckkurve 15c ist hingegen von einem andern Kurventyp als die beiden anderen mittleren Solldrucckurven 15a und b. Ein Vergleich der Druckabfallzeiten 151b, 151c der mittleren Solldrucckurven 15b und 15c macht daher ohne weitere Informationen über die Kurventypen nur in wenigen Fällen Sinn. Es ist für den Fachmann auch klar, dass die Druckabfallzeit 151b, 151c bevorzugt so definiert wird, dass sich für den jeweiligen Kurventyp ein anschaulicher und/oder charakteristischer Wert ergibt, durch den sich die Mitglieder des Kurventyps gut voneinander unterscheiden lassen. Für jeden Kurventyp kann daher eine andere Definition der Druckabfallzeit 151b, 151c definiert werden.

Es kann nun für unterschiedliche Rezepturen und/oder unterschiedliche Lebensmittelarten zum Beispiel jeweils ein Kurventyp vorgegeben sein und dieser kann dann je nach atmosphärischen Bedingungen variiert und/oder skaliert werden, indem unterschiedliche Parameter, wie Druckabfallzeit 151b, 151c, Frequenz und Amplitude 172 der Vakuumpulsierung, gegebenenfalls in Abhängigkeit der Zeit, angepasst werden. Es ist auch möglich, dass für alle Lebensmittel ein Typ von mittlerer Solldruckkurve 15a, b, c benutzt wird, deren Parameter angepasst werden. So kann über die Frequenz und die Amplitude 172 der Vakuumpulsierung zum Beispiel primär eine Anpassung an unterschiedlichen Lebensmittelarten geschehen, während die Wahl der Druckabfallzeit 151b, 151c stärker durch einen Wert der atmosphärischen Bedingungen bestimmt wird. Es könne auch mehr gemessene Parameter genutzt werden, in dem zum Beispiel mehr als eine atmosphärische Bedingung in die Parameterwerte mit eingeht und/oder indem die Solldruckkurve 16 durch mehr Kennzahlen definiert wird. Eine Solldruckkurve 16, deren mittlere Solldruckkurve 15a, b, c zum Beispiel die Form einer Schwingung aufweist, kann durch die Zeiten und Höhen der lokalen Maxima, und die Steile der unterschiedlichen Steigungen sowie den Enddruck beschrieben werden und auf diese Art einen Kurventyp mit beliebig vielen Parametern definieren.

Alternativ oder parallel dazu, solche Kurventypen zu wählen und ihre bestimmenden Parameter entsprechend den Bedürfnissen des Lebensmittels bei den angegebenen atmosphärischen Bedingungen zu wählen, ist es auch möglich, eine grosse Vielfalt unterschiedlicher vordefinierter Solldruckkurven 15a, b, c in einem Speicher bereitzustellen. Auch ist es möglich dass, anders als in den Beispielen aus Fig. 3, auch die mittlere Solldruckkurve 15a, 15b oder 15c zwischendurch ansteigt und nicht monoton abfällt. Weiter kann, wie in dem Beispiel in Fig. 3 mit den mittleren Solldruckkurven 15a und 15b gezeigt, der Enddruck, also der tiefste Druck, der in der Vakuumkammer erreicht wird, variieren.

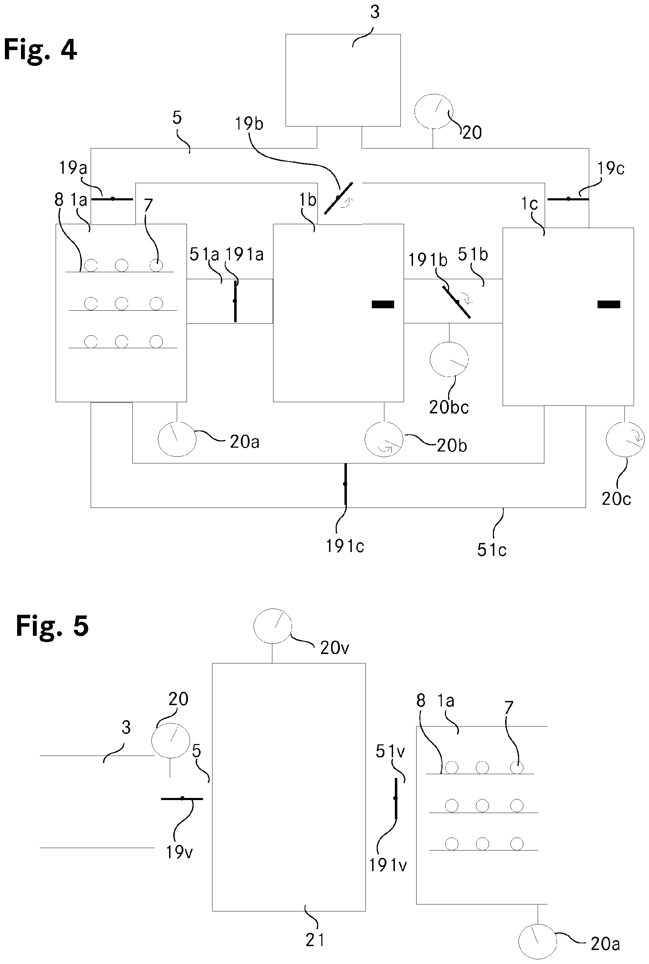

Fig. 4 zeigt eine Ausführungsform einer Vakuumkühlvorrichtung für Lebensmittel, welche mehrere Vakuumkammern umfasst. Im oberen Bereich ist eine Abpumpvorrichtung 3 erkennbar. Diese Abpumpvorrichtung 3 ist mit einer Vakuumleitung 5 mit jeder der drei Vakuumkammern 1a, 1b, 1c verbunden. Weiter sind die Vakuumkammern 1a, 1b und 1c untereinander mit Vakuumleitungen 51a, 51b und 51c verbunden. Alle Zuleitungen zu den Vakuumkammern sind mit Ventilen 19a, 19b und 19c ausgestattet und trennen die Vakuumkammern 1a, 1b, 1c von der Abpumpvorrichtung 3. Die Ventile 191a, 191b und 191c sind in den Vakuumleitungen 51a, 51b und 51c zu finden, die die Vakuumkammern untereinander miteinander verbinden. Hier sind die Ventile als Drosselklappen gezeichnet. Dies ist nicht zwingend notwendig, sondern dient vielmehr der Illustration, da die Darstellung als Drosselklappe anschaulich deutlich macht, wie weit ein Ventil geöffnet oder geschlossen ist. In den Leitungen kann jedes übliche Ventil, das bei den zu erwartenden Druckunterschieden ausreichend dicht ist und den gewünschten Durchfluss erlaubt, eingesetzt werden.

Fig. 4 zeigt ausserdem an verschiedenen Stellen Druckanzeigegeräte 20, 20a, 20b, 20c und 20bc. Diese Druckanzeigegeräte dienen in dieser Figur primär der Erläuterung der Funktionsweise. In der realen Vorrichtung wird nicht zwingend eine solche Vielzahl an Druckmessgeräten benötigt. Es ist allerdings von Vorteil, wenn jede Vakuumkammer 1a, 1b, 1c ein Druckmessgerät 20a, 20b und 20c aufweist, was zumindest ihrer Steuerung oder einer gemeinsamen Steuerung 4 die Daten über den Innendruck zur Verfügung stellt.

So kann sichergestellt werden, dass in der Vakuumkammer 1a, b, c auch tatsächlich die gewünschte Solldruckkurve 16 erreicht wird. In dem in Fig. 4 gezeigten Beispiel wird die Vakuumkammer 1a gerade be- oder entladen. Daher erkennt man im Inneren dieser Vakuumkammer 1a Bleche 8 mit Lebensmitteln 7. Der Druck, ablesbar an dem Zeiger 20a, ist gleich Atmosphärendruck, also auf dem erwarteten Maximalwert. Die Ventile 19a, 191a und 191c zu den anderen Vakuumkammern 1b und 1c und zu der Abpumpvorrichtung 3 sind geschlossen. Die beiden anderen gezeigten Vakuumkammern 1b und 1c sind verschlossen.

In der Vakuumkammer 1c soll bis kurz vor der gezeigten Situation ein Minimaldruck geherrscht haben. Nachdem dieser erreicht wurde, wurde das Ventil 19c geschlossen, welches die Vakuumkammer 1c bis dahin mit der Abpumpvorrichtung 3 verbunden und so das Abpumpen der Gase in der Vakuumkammer 1c ermöglicht hatte. In der Vakuumkammer 1c herrschte zu dem Zeitpunkt an dem das Ventil 19c geschlossen wurde ein Minimaldruck, der jetzt noch an der Skala 20 ablesbar ist, die den Druck in der Vakuumleitung 5 an der Abpumpvorrichtung 3 anzeigt. Da seit diesem Zeitpunkt nämlich alle Ventile 19a, 19b, 19c zu den Vakuumkammern hin geschlossen waren, evakuierte die Abpumpvorrichtung 3 die Vakuumleitung 5. In dem hier gezeigten Beispiel ist man davon ausgegangen, dass der Minimaldruck in der Vakuumkammer 1c der von der Abpumpvorrichtung 3 erreichbare Minimaldruck ist. Daher ist trotz etwas längerer Abpumpdauer der Druck in der Vakuumleitung 5 als gleich dem Minimaldruck der Vakuumkammer 1c angenommen worden.

In der Vakuumkammer 1b soll kurz vor der gezeigten Situation noch Atmosphärendruck geherrscht haben, also der Wert der auf der Skala 20a gezeigt wird. Nun wurden zunächst die beiden Vakuumkammern 1b und 1c miteinander verbunden. Dies geschah, indem das Ventil 191b, welches die Vakuumleitung 51b die die Vakuumkammern 1b und 1c verbindet vorher verschlossen hatte, geöffnet wurde, während die Ventile 19b, 19c und 191c geschlossen blieben. Dies führte zu einem Druckausgleich zwischen den Vakuumkammern 1b und 1c. Dabei stieg der Druck in Vakuumkammer 1c vom Minimaldruck auf einen gewissen Wert, und der Druck in der Vakuumkammer 1b fiel vom Atmosphärendruck auf denselben Wert, der während des Druckausgleichs auch in der Vakuumkammer 1c erreicht wurde. Dieser gemeinsame Druck herrscht nun sowohl in der Vakuumkammer 1b als auch in der Vakuumkammer 1c als auch in der Verbindung der beiden Vakuumkammern, das heisst in der Vakuumleitung 51b, abzulesen an der Skala 20bc. Um den Druck in Vakuumkammer 1b weiter zu senken, wird nun das Ventil 191b zwischen den Vakuumkammern geschlossen und das Ventil 19b zwischen Vakuumkammer 1b und Abpumpvorrichtung 3 geöffnet. Nun wirkt die Abpumpvorrichtung 3 ausschliesslich auf die Vakuumkammer 1b und leert diese. Der Druck in der Vakuumkammer 1b fällt also weiter. Die Vakuumkammer 1c ist, sobald das Ventil 191b vollständig geschlossen ist, teilweise belüftet, nämlich in etwa mit dem halben Atmosphärendruck, wenn die Vakuumkammern das gleiche Volumen haben, und kann, eventuell erst nach dem sie noch weiter belüftet wurde, geöffnet werden. Die gekühlten Lebensmittel in ihrem Inneren können entnommen werden.

In der Zeit des Druckausgleichs zwischen den Vakuumkammern 1b und 1c, kann die Vakuumkammer 1a wieder verschlossen werden, und sobald die Lebensmittel in der Vakuumkammer 1b genügend gekühlt sind und dort der Minimaldruck erreicht wurde, kann das Ventil 191a zwischen den Vakuumkammern 1b und 1a geöffnet werden, sodass nun zwischen diesen Vakuumkammern ein Druckausgleich entsteht. Zuvor sollte wieder das Ventil 19b zwischen der Vakuumkammer 1b und der Abpumpvorrichtung 3 geschlossen werden. Durch die Verbindung der Vakuumkammern wird die Vakuumkammer 1b belüftet und in der Vakuumkammer 1a fällt der Druck schon um etwa die Hälfte ab (wenn die Vakuumkammern dasselbe Volumen haben und der Minimaldruck vernächlssigbar gegenüber dem Atmosphärendruck ist). Nachdem das Ventil 191a zwischen den Vakuumkammern dann geschlossen wurde, kann das Ventil 19a geöffnet werden und die Abpumpvorrichtung 3 senkt den Luftdruck in Vakuumkammer 1a weiter bis zum gewünschten Zielunterdruck. In dieser Art kann immer eine Vakuumkammer geöffnet, beladen und wieder verschlossen werden, während zwischen den anderen Vakuumkammern ein Druckausgleich hergestellt wird, das heisst eine Vakuumkammer belüftet wird, während in der anderen ein erster Druckabfall geschieht, und dann die Abpumpvorrichtung 3 genutzt wird, um eine Vakuumkammer weiter zu evakuieren, während die andere geöffnet und wieder ent- und beladen werden kann. Es ist also ein kontinuierlicher Ablauf möglich und die Abpumpvorrichtung 3 wird in ihrer Kapazität gut ausgenutzt.

Fig. 5 zeigt eine Ausführungsform mit einem Unterdruckspeicher 21. Dieser Unterdruckspeicher 21 kann ein grösseres oder ein kleineres Volumen als die Vakuumkammer 1a haben. Die Abpumpvorrichtung 3 ist mit einer Vakuumleitung 5 mit dem Unterdruckspeicher 21 verbunden. Der Unterdruckspeicher 21 ist über die Vakuumleitung 51v mit der Vakuumkammer 1a verbunden.

In den Vakuumleitungen 5 und 51v, die sich zwischen Abpumpvorrichtung 3 und Unterdruckspeicher 21 beziehungsweise Unterdruckspeicher 21 und Vakuumkammer 1a befinden, befinden sich die Ventile 19v und 191v. Auf das Ventil 19v könnte dabei auch verzichtet werden.

Während die Vakuumkammer 1a mit Lebensmitteln 7 auf Blechen 8 beladen wird, herrscht in ihr Atmosphärendruck, wie an dem Druckmesser 20a zu erkennen ist. In dieser Zeit ist das Ventil 191v, welches sich zwischen dem Unterdruckspeicher 21 und der Vakuumkammer 1a befindet, bevorzugt geschlossen. Dadurch wird in dem Unterdruckspeicher 21 ein tiefer Druck konserviert beziehungsweise weiter durch die Abpumpvorrichtung 3 erzeugt. Dies ist an dem Druckmesser 20v erkennbar.

Nachdem der Beladevorgang abgeschlossen ist und die Vakuumkammer 1a wieder verschlossen ist, kann das Ventil 91v geöffnet werden. Indem das Ventil 91v bevorzugt kontrolliert geöffnet wird, kommt es zu einem kontrollierten und gesteuerten Druckausgleich zwischen dem Unterdruckspeicher 21 und der Vakuumkammer 1a. Welcher Enddruck bei einem vollständigen Druckausgleich dieser beiden Volumen erreicht wird, hängt von dem Verhältnis der Volumina in dem Unterdruckspeicher 21 und der Vakuumkammer 1a ab. Die Abpumpvorrichtung 3 kann während diesem kontrollierten Druckausgleich entweder weiter mit dem Unterdruckspeicher 21 verbunden sein, also Ventil 19v geöffnet oder nicht existent, oder das Ventil 19v kann geschlossen werden. Durch eine geschickte Wahl des Volumens des Unterdruckspeichers 21 kann somit ein Maximaldruck erreicht werden, gegen welchen die Abpumpvorrichtung 3 im Normalbetrieb maximal pumpen muss.

Ein Unterdruckspeicher 21 muss nicht, wie in Fig. 5 gezeigt, ein eigens dafür vorgesehenes Volumen sein. Ein gewisser Unterdruckspeicher 21 ist auch durch die Vakuumleitung 5 zwischen Abpumpvorrichtung 3 und Vakuumkammer 1a gegeben. Auch können zusammengeschaltete Vakuumkammern, wie in Fig. 4 gezeigt, als Unterdruckspeicher 21 füreinander genutzt werden. Auch können die Ausführungsformen aus Fig. 4 und Fig. 5 kombiniert werden, indem auch in einer Ausführungsform mit mehreren Vakuumkammern, wie in Fig. 4, ein Unterdruckspeicher 21 zwischen der Abpumpvorrichtung 3 und der Verteilung auf die einzelnen Vakuumkammern 1a, 1b und 1c montiert wird. Ein Unterdruckspeicher 21 hat zudem den Vorteil, dass sich tiefe Drücke vergleichsweise schnell erreichen lassen und unabhängig von der Pumpenleistung sind: Ist das Volumen des Unterdruckspeichers 21 zum Beispiel doppelt so gross wie das Volumen der Vakuumkammer, und geht man davon aus, dass der Druck in dem Unterdruckspeicher 21 vernachlässigbar ist gegenüber dem Atmosphärendruck, sinkt der Druck in der Vakuumkammer 1a durch einen Druckausgleich zwischen Vakuumkammer 1a und Unterdruckspeicher 21 auf ein Drittel des Atmosphärendrucks. Wie lange die Abpumpvorrichtung 3 dafür gebraucht hat, in dem Unterdruckspeicher 21 den tiefen Druck herzustellen, spielt keine Rolle mehr dafür, wie schnell sich in der Vakuumkammer 1a der Druck durch den Druckausgleich mit dem Unterdruckspeicher 21 senken lässt. So lässt sich daher auch mit einer eher schwachen Abpumpvorrichtung 3 ein rascher Druckabfall realisieren, wenn die Zeit dafür zur Verfügung steht und die Abpumpvorrichtung 3 überhaupt den nötigen Unterdruck erreichen kann.

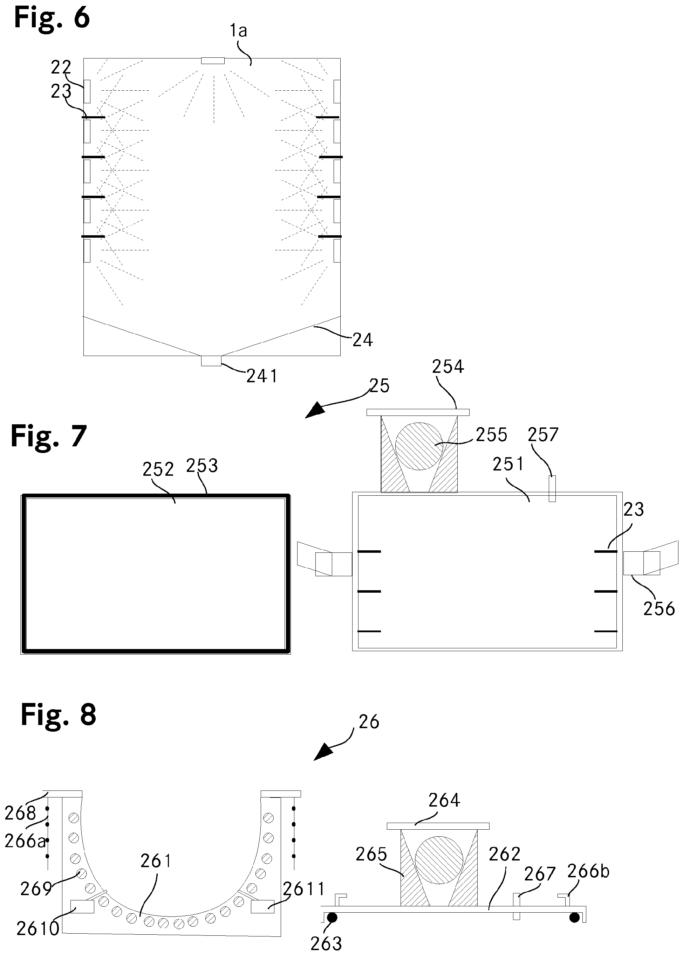

Fig. 6 zeigt die Vakuumkammer 1a in etwas grösserem Detail. Die Vakuumkammer 1a weist verschiedene Blechaufnahmen 23 auf. In diese können Bleche 8 mit Lebensmitteln 7 geschoben werden. Alternativ kann die Vakuumkammer 1a auch keine eigenen Blechaufnahmen 23 aufweisen sondern beispielsweise dafür geeignet sein, ein Regal und/oder einen geeigneten Wagen aufzunehmen auf beziehungsweise in welchem sich Lebensmittel 7 befinden.

Weiter zeigt die in Fig. 6 gezeigte Vakuumkammer 1a Waschdüsen 22. Diese Waschdüsen 22 versprühen Wasser und/oder eine lebensmitteltaugliche Lauge derart, dass alle Stellen auf der Innenseite der Vakuumkammer 1a, die mit Lebensmittel in Kontakt kommen könnten, gereinigt werden.

Bevorzugt sind die Waschdüsen 22 derart angeordnet, dass auch Bleche 8, die sich in den Blechaufnahmen 23 befinden, von dem Wasser und/oder der lebensmitteltauglichen Lauge benetzt werden. Daher sind in dem vorliegenden Beispiel die Waschdüsen 22 auch zwischen den Blechaufnahmen 23 angeordnet. Alternativ kann aber auch gefordert werden, dass die Bleche 8 in anderen Aufnahmen oder in einer anderen Position als der, in der sie Lebensmittel tragen, zur Reinigung in der Vakuumkammer 1a platziert werden sollen. So kann die Anzahl Waschdüsen 22 verringert werden.

Weiter weist die Vakuumkammer eine Kondenswasseraufnahme 24 auf. Diese ist hier in Form von einem abgeschrägten Kammerboden eingezeichnet. Am tiefsten Punkt der Kondenswasseraufnahme 24 befindet sich ein Ablass für Kondenswasser 241. Die Kondenswasseraufnahme 24 und ihr Ablass 241 können in dieser Ausführungsform auch dazu genutzt werden, das Waschwasser beziehungsweise die lebensmittelfähige Lauge, welche durch die Waschdüsen 22 verteilt wird, aufzunehmen und abzuleiten.

Der abgeschrägte Boden 24 kann dabei bevorzugt gekühlt werden, sodass es gezielt dort zur Kondensation von Wasserdampf kommt. Auf eine solche Kühlung kann aber auch verzichtet werden, da die Innenseiten der Vakuumkammer 1a in vielen Fällen auch ohne Kühlung kälter sind als die abzukühlenden Lebensmittel 7. Der Waschvorgang, in welchem die Waschdüsen 22 genutzt werden, findet bevorzugt bei Atmosphärendruck statt. Trotzdem sollte die Tür der Vakuumkammer 1a dazu geschlossen sein, um auch die Türinnenseite zu reinigen und um Verschmutzung ausserhalb der Vakuumkammer 1a zu vermeiden.

Die Vakuumkammer 1a kann nach dem Waschvorgang dadurch getrocknet werden, dass sie an die Abpumpvorrichtung 3 angeschlossen wird. In dem entstehenden Unterdruck verdampft das Wasser im Inneren der Vakuumkammer 1a rasch. Diese Verdampfung kühlt die Innenwände der Vakuumkammer 1a, so dass bei diesem Vorgang ohne zusätzliche Kühlung die meiste Feuchtigkeit nicht innerhalb der Vakuumkammer 1a kondensiert sondern abgepumpt wird. Die Vakuumkammer 1a als Ganzes trocknet daher.

Fig. 7 zeigt einen Lagercontainer 25 für Lebensmittel 7, welcher an die Abpumpvorrichtung 3 angeschlossen werden kann. Der Lagercontainer 25 besteht aus einer Box 251 und einem Deckel 252. In der Box 251 befinden sich wiederum Blechaufnahmen 23. Weiter umfasst die Box einen Flansch 254 zum Anschliessen an die Abpumpvorrichtung 3. Unterhalb dieses Flansches 254 befindet sich ein Rückschlagventil 255. Ausserdem umfasst der Lagercontainer 25 bevorzugt ein Belüftungssystem 257, welches gezielt geöffnet und geschlossen werden kann. Auf der Aussenseite des Lagercontainers 25 ist zudem ein Verriegelungssystem 256 vorhanden, mit welchem der Deckel 252 an der Box 251 befestigt werden kann. Der Deckel 252 des Lagercontainers 25 umfasst weiter eine Dichtung 253. Diese Dichtung 253 könnte auch auf der Boxseite 251 der Öffnung angebracht sein. Um den Lagercontainer 25 zu benutzen, wird nun die Abpumpvorrichtung 3 an dem Flansch 254 des Lagercontainers 25 angeschlossen. Der Lagercontainer 25 wird geschlossen, indem der Deckel 252 des Lagercontainers 25 auf die Box 251 gesetzt wird und mit dem Verriegelungssystem 256 verriegelt wird. Die Dichtung 253 erzeugt einen luftdichten Verschluss zwischen Box 251 und Deckel 252. Dann wird mit der Abpumpvorrichtung 3 die Luft aus dem Lagercontainer 25 abgepumpt. Das Rückschlagventil 255 ist dabei so gestaltet, dass Gase aus dem Inneren des Lagercontainers 25 abgepumpt werden können. Sobald der Druck innerhalb des Lagercontainers 25 allerdings tiefer ist als der Druck auf Seite des Flansches 254, verschliesst sich das Ventil 255 und erhält damit den Unterdruck innerhalb des Lagercontainers 25. Der Lagercontainer 25 kann also nach erfolgtem Abpumpen durch die Abpumpvorrichtung 3 von dieser getrennt werden. Im geschlossenen Zustand erhält er den Unterdruck in seinem Inneren. Da durch den Unterdruck im Inneren der Deckel 252 nun mit einiger Kraft an die Box 251 gepresst wird, lässt sich der Lagercontainer 25 in diesem Zustand nur schwer wieder öffnen. Um das Öffnen eines abgepumpten Lagercontainers 25 zu erleichtern, kann nun über das Belüftungssystem 257 langsam wieder Luft in den Lagercontainer 25 geleitet werden und somit ein Druckausgleich zwischen Umgebung und Innerem des Lagercontainers 25 geschehen. Sobald der Druckausgleich im Wesentlichen vollständig geschehen ist, lässt sich der Deckel 252 ohne übermässige Kraft von der Box 251 trennen. Das Verriegelungssystem 256 hätte schon direkt nachdem der Unterdruck erreicht wurde geöffnet werden können, wird es aber nach dem Belüften geöffnet, so wird verhindert dass der Deckel 252 versehentlich während des Belüftens herunter fällt.

Lebensmittel 7 können auch anders in dem Lagercontainer 25 aufbewahrt werden als auf Blechen 8 auf Blechaufnahmen 23. Ebenso wäre es zum Beispiel möglich, dass der Deckel 252 nicht von der Seite aufgesetzt, sondern von oben auf die Box 251 gelegt wird und die Lebensmittel einfach in die Box 251 gelegt werden. Ein Lagercontainer 25 kann auch zum Beispiel mit Rollen versehen sein und/oder mit weiteren Griffen, um ihn einfacher tragbar und/oder transportierbar zu machen.

Das Verriegelungssystem 256 kann anders gestaltet sein. Es kann auch vollständig darauf verzichtet werden, da, sobald ein Unterdruck herrscht, der Deckel 252 von dem Umgebungsdruck an die Box 251 gepresst wird. Dazu müssen allerdings ein Benutzer und/oder eine andere Art von Vorrichtung den Deckel 252 während des Abpumpvorgangs an die Box 251 pressen, so dass eine luftdichte Dichtung gegeben ist.

Auf das Rückschlagventil 255 kann auch verzichtet werden. In diesem Fall kann der Lagercontainer durch einen anderen Verschluss wie zum Beispiel einen Absperrhahn, einen Schieber oder einen Pfropfen vom Unterdruck in der Abpumpvorrichtung 3 getrennt werden, bevor die Abpumpvorrichtung 3 als Gegenstand vom Lagercontainer 25 getrennt wird. Es ist weiter möglich, dass die Verbindung zwischen Lagercontainer 25 und Abpumpvorrichtung 3 so gestaltet ist, dass der Druckabfall, der bei der Nutzung auftritt, akzeptabel ist und die Nutzbarkeit des Lagercontainers 25 nicht wesentlich einschränkt. Dazu kann die Verbindung zwischen Lagercontainer 25 und Abpumpvorrichtung 3 zum Beispiel sehr klein sein. Ist die Zeit kurz, zwischen einer Trennung von Lagercontainer 25 und Abpumpvorrichtung 3 und dem Aufsetzen eines dichten Verschlusses durch einen Benutzer, so kann der entstehende Druckabfall unwesentlich für die Nutzung sein. Um dies zu nutzen, wird bevorzugt anstelle eines Rückschlagventils 255 ein beliebiger, schnell schliessbarer Verschluss verwendet. Die kurze Zeit bzw. das schnelle Verschliessen und die kleine Verbindung stehen hier bevorzugt derart im Verhältnis zueinander, dass die Druckdifferenz zwischen dem Druck im Inneren des Lagercontainers und dem Aussendruck bei einem zügigen Handeln sich um weniger als 20%, bevorzugt um weniger als 10%, verringert. Bevorzugt bedeutet zügiges Handeln und/oder schnelles Verschliessen, dass innerhalb von weniger als 3 Sekunden ein weiterer Druckausgleich verhindert werden kann.

Auf den Flansch 254 kann auch verzichtet werden: In diesem Fall wird der Lagercontainer 25 nicht selbst direkt an die Abpumpvorrichtung 3 angeschlossen, sondern zum Abpumpen einfach mit Lebensmitteln 7 gefüllt und im geschlossenen Zustand in die Vakuumkammer 1 gestellt. Wird nun die Vakuumkammer 1 von der Abpumpvorrichtung 3 abgepumpt, so öffnet sich das Rückschlagventil 255 und der Lagercontainer 25 wird abgepumpt. Ist der gewünschte Unterdruck erreicht, wird die Vakuumkammer 1 belüftet. Dadurch schliesst das Rückschlagventil 255 und der Lagercontainer 25 hält den Unterdruck in seinem Inneren.

Fig. 8 zeigt eine Aufnahme für Vorteig 26 der Vakuumvorrichtung. Die Aufnahme für Vorteig 26 der Vakuumvorrichtung umfasst eine schüsselförmige Vorteigaufnahme 261, welche von Kühlschleifen 269 umgeben ist.

Weiter führen zwei Sensoren 2611 und 2610 in die Vorteigaufnahme 261. Dabei handelt es sich insbesondere um einen Temperatursensor 2611 und ein pH-Wert-Messsystem 2610. Mit diesen beiden Messungen kann der Teig im Inneren der Vorteigaufnahme 261 kontrolliert werden. Alternativ kann auch auf eine oder beide dieser Messungen verzichtet werden oder es können weitere Parameter bestimmt werden. Auch kann es zum Beispiel für die Temperaturmessung genügen, wenn kein direkter Zugang zum Vorteig gegeben ist, sondern beispielsweise eine Infrarotaufnahme durchgeführt wird oder die Temperatur an anderer Stelle der Aufnahme für den Vorteig 26 gemessen wird.

Die Aufnahme für den Vorteig 26 der Vakuumvorrichtung umfasst weiter einen Flansch 268 zum Aufsetzen eines Deckels 262 der Aufnahme für den Vorteig 26. An diesem Flansch 268 ist weiter bevorzugt ein Verriegelungssystem 266a befestigt. Mit diesem kann der Deckel 262 bevorzugt an dem Flansch 268 befestigt werden. Der Deckel 262 der Aufnahme für den Vorteig 262 weist wiederum einen Flansch 264 für den Anschluss der Abpumpvorrichtung 3 auf. Dieser Flansch 264 ist wiederum mit einem Rückschlagventil 256 mit dem Deckel 262 verbunden. Weiter weist der Deckel 262 eine Belüftungsvorrichtung 267, sowie einen zweiten Teil des Verriegelungssystems 266b auf. Ausserdem befindet sich an der Unterseite des Deckels 262 eine Dichtung 263. Die Aufnahme für den Vorteig 26 kann nun vakuumdicht verschlossen werden, indem der Deckel 262 auf die Vorteigaufnahme 261 gesetzt wird und mit den Verriegelungen 266a und 266b geschlossen wird. In diesem geschlossenen Zustand dichtet die Dichtung 263 den Deckel 262 und die Vorteigaufnahme 261 vakuumdicht ab. Dann kann die Abpumpvorrichtung 3 an den Flansch 264 angeschlossen werden. Sobald der Druck auf der Seite der Abpumpvorrichtung 3 an dem Ventil 265 tiefer ist als der innerhalb der Vorteigaufnahme 261, kann der Luftdruck innerhalb der Aufnahme für Vorteig 26 sinken, da sich das Ventil 265 in diese Richtung öffnet. Wird allerdings die Abpumpvorrichtung 3 weggenommen und ist damit der Druck auf der Aussenseite des Flansches 264 grösser als der innerhalb der Aufnahme für den Vorteig 26, so schliesst sich das Ventil 265 und der gegebene Unterdruck wird innerhalb der Vorteigaufnahme 261 gehalten.

Um den Deckel 262 von der Vorteigaufnahme 261 zu lösen, empfiehlt es sich, die Vorteigaufnahme 261 zunächst zu belüften. Dazu kann das Belüftungssystem 267 genutzt werden. Sobald ein Druckausgleich zwischen Umgebungsdruck und Innendruck der Vorteigaufnahme 261 gegeben ist, lässt sich das Verriegelungssystem 266a, b einfach lösen und den Deckel 262 abheben. Auch hier ist es wiederum möglich, auf das Verriegelungssystem 266ab zu verzichten. Auch in diesem Fall muss allerdings ein Benutzer und/oder ggf. das Gewicht des Deckels 262 dafür sorgen, dass während des Abpumpvorgangs eine vakuumdichte Dichtung zwischen dem Inneren der Vorteigaufnahme 261 und dem Deckel 262 besteht.

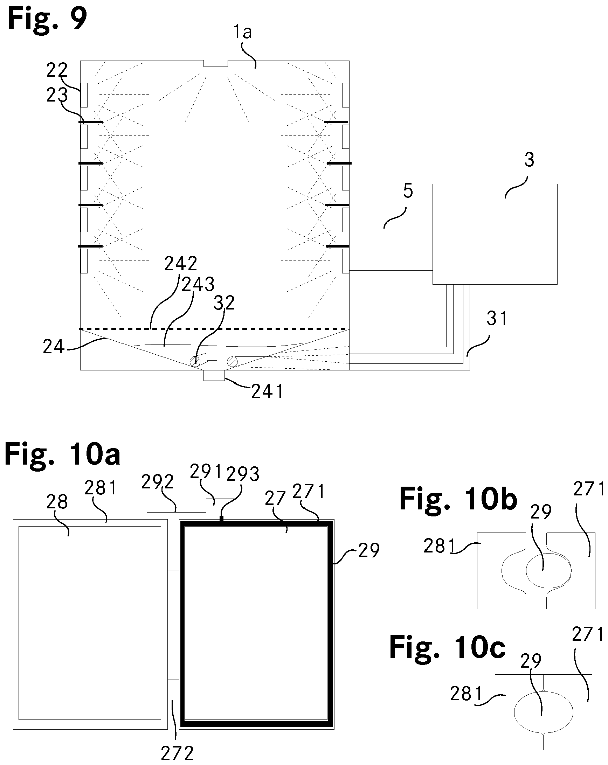

Figur 9 zeigt eine Ausführungsform in der die Abwärme der Abpumpvorrichtung 3 teilweise dazu genutzt wird die Luftfeuchtigkeit beziehungsweise den Druck innerhalb der Vakuumkammer 1a zu regulieren und andererseits einen Teil der Abwärme der Abpumpvorrichtung 3 abzuführen. Dazu wird die Abwärme der Abpumpvorrichtung 3, die zumindest teilweise über ein Pumpenkühlmittel aus der Abpumpvorrichtung 3 herausgeführt wird, durch Zuleitungen 31 in den Bereich der Kondenswasseraufname 24 geleitet. Dort fliesst es durch Pumpenkühlmittel-Kühlschlaufen 32, welche unterhalb des Kondenswasserspiegels 243 liegen. Um die Kühlschlaufen 32 vor Beschädigung zu schützen und um Lebensmittel und Benutzer davor zu bewahren in das Kondenswasser und/oder Waschwasser zu gelangen, kann ein Gitterboden 242 in der Vakuumkammer 1a oberhalb des Kondenswasserspiegels 243 angebracht sein.

Die Abwärme der Abpumpvorrichtung 3 erwärmt auf diese Art das Kondenswasser 32, welches daher nun schneller als zuvor verdampft. Dadurch steigt die Luftfeuchtigkeit in der Vakuumkammer 1a und, wenn das Abpumpen nicht verstärkt wird oder ausgesetzt ist, steigt auch der Druck in der Vakuumkammer 1 an. Anders als bei einer Belüftung mit Aussenluft, wird auf diese Art die Kammer mit Wasserdampf belüftet. Es ist auch möglich, dass in der Kondenswasseraufnahme 24 befindliche Wasser derart stark zu beheizen, dass eine kontrollierte Kondensation an den Lebensmitteln geschieht.

An einer derart fein befeuchteten Lebensmittel Oberfläche kann zum Beispiel ein Zuckerdekor oder Salz anhaften. Auch zum Wiederaufbacken kann ein gezieltes Befeuchten manchmal gewünscht sein.

In einer Schaltung mit mehreren Vakuumkammern ist es zum Beispiel möglich, dass die Abpumpvorrichtung in der einen Vakuumkammer den Druck absenkt und dadurch die Kühlung zustande kommt. In einer zweiten Kammer, in welcher die Lebensmittel schon genügend abgekühlt sind, kann die Abwärme der Abpumpvorrichtung 3 dazu genutzt werden, die Luftfeuchtigkeit in der Kammer wie oben beschrieben zu erhöhen.

Damit bei diesem Verfahren der Kondenswasserspiegel 243 nicht soweit fällt, dass die Pumpenkühlmittel-Kühlschlaufen nicht mehr im Wasser sind, können zum Beispiel einzelne Waschdüsen 22 mit einem sehr geringen Druck betrieben werden, so dass das Wasser, was sie verlässt, die Wände der Vakuumkammer 1a hinab in die Kondenswasseraufname 24 läuft und sie so wieder aufgefüllt wird. Alternativ oder zusätzlich dazu kann aber auch der Kondenswasserablass 241 genutzt werden um neues Wasser nachzufüllen. Oder es kann eine andere Wasserquelle geben. Auch können dem Kondenswasser Aromastoffe beigesetzt werden und/oder andere verdampfende Flüssigkeiten als Wasser genutzt werden. So könnten zum Beispiel Kuchen auf diese Art mit zum Beispiel Obstschnaps und/oder Rosenwasser versetzt werden.

Solche Verfahren lassen sich auch mit anderen Flüssigkeitsgefässen und Heizquellen im Inneren der Vakuumkammer 1a realisieren.

Fig. 10a, 10b und 10c zeigen ein Dichtungssystem für die Tür 28 einer Vakuumkammer 1. Eine Vakuumkammer 1 umfasst eine Kammer 27 und eine Tür 28. Sowohl die Kammer 27 als auch die Tür 28 weisen eine Aufnahme für einen Dichtungsring auf, 271 an der Kammer und 281 an der Tür. In einer dieser Aufnahmen, hier in der Aufnahme der Kammer 271 gezeigt, befindet sich ein Dichtungsschlauch 29. Dieser Dichtungsschlauch 29 soll eine aufblasbare Schlauchdichtung 29 sein. Das Aufblasen dieses Dichtungsschlauches 29 erfolgt über einen Kompressor und eine Steuerung 291. An diesem Kompressor und dieser Steuerung 291 ist eine Druckleitung 293 angebracht, durch welche Druckluft oder ein Fluid in den Dichtungsschlauch 29 geleitet werden kann. Dies soll geschehen, sobald die Tür geschlossen ist. Die Schliessung der Tür wird festgestellt über eine Signalleitung 292 und einen beliebigen geeigneten Sensor, wie zum Beispiel das Schliessen eines elektrischen Kontaktes. Es sind allerdings auch andere Messtechniken möglich. So könnte statt einer Datenleitung mit der Tür auch die Positionierung von Scharnieren 272 geprüft werden und/oder über Leitfähigkeit und/oder kapazitive Messung könnte die Präsenz der Tür 28 in unmittelbarer Nähe der Kammer 27 festgestellt werden.

Fig. 10b zeigt die Aufnahme für die Schlauchdichtung und den Dichtungsschlauch 29 im Querschnitt. 271 bezeichnet die Aufnahme der Schlauchdichtung auf der Kammerseite. Es handelt sich um eine Ausnehmung die in etwa die Form eines Halbkreises hat und sich in den Türrahmen der Kammer 27 hinein erstreckt. 281 bezeichnet die Aufnahme der Schlauchdichtung auf der Türseite. Auch hier handelt es sich um eine Ausnehmung die in etwa die Form eines Halbkreises hat und die sich hier in die Tür 28 hinein erstreckt. Der nicht gefüllte Dichtungsschlauch 29 ist in dem gezeigten Beispiel in der kammerseitigen Aufnahme 271 befestigt. Sobald die Tür 28 nun geschlossen ist, wie in Fig. 10c gezeigt, bildet sich zwischen der Aufnahme der Kammerseite 271 und der Aufnahme der Türseite 281 ein Hohlraum von einem etwa kreisförmigen Querschnitt. Dieser Hohlraum kann vollständig vom Dichtungsschlauch 29 ausgefüllt werden. Um zu verhindern, dass Luft zwischen Dichtungsschlauch 29 und den Aufnahmen 271, 281 Blasen bildet und damit verhindert, dass die Schlauchdichtung 29 sich vollständig füllen kann, weisen die Aufnahmen der Schlauchdichtung auf der Tür 281 und/oder auf der Kammerseite 271 bevorzugt in einigen Abständen Öffnungen, zum Beispiel in der Form von Bohrungen mit kleinem Durchmesser, nach aussen hin auf. Der Dichtungsschlauch 29 ist bevorzugt derart konstruiert, dass er sich unter Druck deutlich ausdehnt und somit auf möglichst der ganzen Innenfläche der Ausnehmungen in direkten Kontakt mit der Aufnahme auf der Tür 281 und auf der Kammerseite 271 tritt. So wird ein grosses Gebiet erreicht, in welchem der volle Anpressdruck besteht.

Kommen die Aufnahmen auf der Kammerseite 271 und auf der Türseite 281, so wie in Fig. 10c gezeigt, schlüssig aufeinander, so stützen diese Aufnahmen den Dichtungsschlauch 29 und schützen diesen vor ungewünschten Verformungen. Nachteilig ist dabei aber, dass der Schlauch 29 unter Umständen in seiner Ausdehnung übermässig eingeschränkt wird, und es zu Faltenbildungen kommen könnte, entlang derer wiederum eine nicht optimale Dichtung entsteht. Daher kann es auch vorteilhaft sein, wenn ein gewisser Spalt zwischen der Aufnahme der Türseite 281 und der Aufnahme auf der Kammerseite 271 bestehen bleibt und in diesem Bereich nur der Dichtungsschlauch 29 die Abdichtung bildet. Gegebenenfalls kann der Dichtungsschlauch 29 in diesem Bereich speziell verstärkt sein.

Die vorliegende Dichtung, die in den Fig. 10a bis 10c gezeigt ist, hat den Vorteil, dass sie auch die Vakuumpulsierung problemlos übersteht, da der Druckunterschied zwischen dem Inneren der Schlauchdichtung und Aussendruck beziehungsweise Druck im Inneren der Vakuumkammer 1 immer deutlich grösser ist als die während der Vakuumpulsierung vorkommenden Druckunterschiede.

Da die Dichtung bei offener Tür 28, und daher entleertem Dichtungsschlauch 29 vergleichsweise dünn ist und vollständig innerhalb der Aufnahme der Kammerseite 271 liegen kann, wird sie durch das Schliessen der Tür 28 mit normalen Scharnieren 272 nur minimal oder gar nicht durchgewalkt. Dies erlaubt die Verwendung von herkömmlichen Scharnieren 272, was wiederum die Handhabung der Vakuumkammer vereinfacht.

## Patentansprüche

1. Verfahren zur Vakuumkühlung von Lebensmitteln (7), umfassend die folgenden Schritte:

   a) Platzieren von Lebensmitteln (7) in einer Vakuumkammer (1)
   b) Angeben wenigstens einer Luftfeuchtigkeit und/oder eines Taupunktes in einem externen Bereich (2), insbesondere an einem geplanten Lagerort für die Lebensmittel (7)
   c) Abpumpen von Gasen in der Vakuumkammer (1) mit Hilfe einer Abpumpvorrichtung (3), derart, dass ein zeitlicher Druckverlauf in der Vakuumkammer (1) in Abhängigkeit von der wenigstens einen Luftfeuchtigkeit und/oder dem wenigstens einen Taupunkt des externen Bereichs (2) kontrolliert wird.

2. Verfahren zur Vakuumkühlung von Lebensmitteln (7) nach Anspruch 1, wobei die wenigstens eine Luftfeuchtigkeit und/oder der wenigstens eine Taupunkt des externen Bereichs (2), insbesondere des geplanten Lagerortes der Lebensmittel, durch eine manuelle Eingabe und/oder durch eine Übertragung von Sensordaten und/oder durch eine Prognoserechnung angegeben werden.

3. Verfahren zur Vakuumkühlung von Lebensmitteln (7) nach einem der Ansprüche 1 bis 2, wobei der zeitliche Druckverlauf beim Abpumpen einer Solldruckkurve (16) folgt und diese insbesondere durch die Parameter Amplitude (172) und Frequenz von einer Vakuumpulsierung sowie einer Druckabfallzeit (151b,c) charakterisiert wird
und Werte einer oder mehrerer dieser Parameter von der Luftfeuchtigkeit und/oder dem Taupunkt des externen Bereichs (2), insbesondere des geplanten Lagerortes und insbesondere auch einer Art der Lebensmittel (7) abhängen,
wobei insbesondere die Werte der Frequenz und Amplitude (172) der Vakuumpulsierung zumindest auch durch die Art der Lebensmittel (7) bestimmt werden und der Wert der Druckabfallzeit (151b,c) zumindest auch von der Luftfeuchtigkeit und/oder dem Taupunkt des externen Ortes (3), insbesondere des geplanten Lagerortes, bestimmt wird.

4. Verfahren zur Vakuumkühlung von Lebensmitteln nach einem der Ansprüche 1 bis 3, **dadurch gekennzeichnet, dass**
zwei oder mehr Vakuumkammern (1a,b,c), die mit derselben Abpumpvorrichtung (3) verbunden sind, in der folgenden Abfolge benutzt werden:

a) In einer ersten Vakuumkammer (1a) herrscht ein Zielunterdruck, währenddessen wird eine zweite Vakuumkammer (1b) mit den Lebensmitteln (7) beladen und luftdicht geschlossen

b) Die erste Vakuumkammer (1a) und die zweite Vakuumkammer (1b) werden derart miteinander verbunden, dass ein Druckausgleich zwischen der ersten und der zweiten Vakuumkammer (1a und 1b) stattfindet.

c) Die erste und die zweite Vakuumkammer (1a und 1b) werden derart voneinander getrennt, dass es keinen Druckausgleich mehr zwischen der ersten und der zweiten Vakuumkammer (1a und 1b) gibt.

d) Die zweite Vakuumkammer (1b) wird derart mit der Abpumpvorrichtung (3) verbunden, dass durch die Abpumpvorrichtung (3) der Druck in der zweiten Vakuumkammer (1b) weiter abnimmt bis der Zielunterdruck erreicht ist, während die erste oder eine weitere Vakuumkammer (1a oder 1c) erneut mit Lebensmitteln (7) beladen und luftdicht geschlossen wird.

e) Punkte b) bis d) werden wiederholt, wobei die zweite Vakuumkammer (1b) an Stelle der ersten Vakuumkammer (1a) tritt und die erste oder weitere Vakuumkammer (1a oder 1c) an Stelle der zweiten Vakuumkammer (1b) tritt.

5. Verfahren zur Vakuumkühlung von Lebensmitteln (7) nach Anspruch 1-4, **dadurch gekennzeichnet, dass**

die Abpumpvorrichtung (3) einen Unterdruckspeicher (21) umfasst und in diesem eine Vakuumpumpe einen Unterdruck erzeugt und zum Abpumpen der Vakuumkammer (1), die Vakuumkammer (1) mit dem Unterdruckspeicher (21) verbunden wird, insbesondere in einem kontrolliertem Maße, so dass ein, bevorzugt zumindest teilweiser, Druckausgleich zwischen Unterdruckspeicher (21) und Vakuumkammer (1) hergestellt wird.

6. Vakuumkühlvorrichtung für Lebensmittel (7), insbesondere Backwaren, insbesondere für ein Verfahren nach einem der Ansprüche 1 bis 5, umfassend eine Vakuumkammer (1), eine Abpumpvorrichtung (3), eine Steuerung (4), mit welcher eine Nutzung der Abpumpvorrichtung (4) gesteuert werden kann und einen Sensor (9) für Luftfeuchtigkeit und/oder Taupunkt in einem externen Bereich (2), **dadurch gekennzeichnet, dass** die Steuerung (4) derart ausgebildet ist, dass ein Abpumpvorgang in Abhängigkeit von der Luftfeuchtigkeit und/oder von dem Taupunkt eines externen Bereichs (2), insbesondere eines geplanten Lagerortes der Lebensmittel (7), die und/oder der durch eine Übertragung von Sensordaten angegeben wird, gesteuert werden kann.

7. Vakuumkühlvorrichtung nach Anspruch 6, wobei die Vorrichtung eine manuelle Eingabevorrichtung (11) und/oder eine Einlesevorrichtung für Sensordaten und/oder eine Schnittstelle zum Empfang von Daten aufweist, mit der die Luftfeuchtigkeit und/oder der Taupunkt des externen Bereichs (2) für die Steuerung (4) bereitgestellt werden können.

8. Vakuumkühlvorrichtung nach einem der Ansprüche 6 bis 7, wobei die Vorrichtung weiter eine Kondenswasseraufnahme (24) umfasst.

9. Vakuumkühlvorrichtung nach einem der Ansprüche 6 bis 8, wobei die Vorrichtung einen Speicher umfasst in welchem unterschiedliche Solldruckkurven (16) für die Steuerung bei unterschiedlichen Luftfeuchtigkeiten und/oder Taupunkten des externen Bereiches (2), und insbesondere für die unterschiedlichen Arten von Lebensmitteln (7), hinterlegt sind und/oder in dem ein Programm hinterlegt ist, welches in Abhängigkeit mindestens einer der Luftfeuchtigkeiten und/oder der Taupunkte des externen Bereiches (2), und insbesondere in Abhängigkeit der Art der Lebensmittel (7), die Solldruckkurve (16) bestimmen kann.

10. Vakuumkühlvorrichtung nach einem der Ansprüche 6 bis 9, **dadurch gekennzeichnet, dass** die Abpumpvorrichtung (3) derart an mehrere Vakuumkammern (1a,b,c) angeschlossen ist, dass ein Druck in den unterschiedlichen Vakuumkammern (1a,b,c) unabhängig voneinander regelbar ist, wobei bevorzugt die Vakuumkammern (1a,b,c) untereinander derart verbunden sind, dass auch ein Unterdruckausgleich zwischen zwei oder mehr Vakuumkammern (1a,b,c) möglich ist.

11. Vakuumkühlvorrichtung für Lebensmittel (7) nach einem der Ansprüche 6 bis 10, die einen oder mehrere Lagercontainer (25) umfasst, welche unabhängig von der Vakuumkammer (1) an die Abpumpvorrichtung (3) angeschlossen werden können und in denen ein, insbesondere durch die Abpumpvorrichtung (3) erzeugbarer, Unterdruck unabhängig von der Abpumpvorrichtung (3) gehalten werden kann, wobei es sich bei dem Unterdruck bevorzugt um einen Druck von weniger als 500 mbar, besonders bevorzugt von weniger als 200 mbar handelt.

12. Vakuumkühlvorrichtung für Lebensmittel (7) nach einem der Ansprüche 6 bis 11 **dadurch gekennzeichnet, dass** sie weiter eine Aufnahme für Vorteig (26) aufweist welche eine Vorteigsteuerung umfasst, mit welcher eine Innentemperatur der Aufnahme für Vorteig (26) in Abhängigkeit von einem Messwert einer pH-Wert-Messvorrichtung (2610) eingestellt werden kann, und wobei die Aufnahme für Vorteig (26) als Vakuumkammer (1) ausgebildet ist und insbesondere weiter dazu geeignet ist den Unterdruck zu halten, welcher durch die Abpumpvorrichtung (3) in ihr erzeugbar ist.

13. Vakuumkühlvorrichtung für Lebensmittel (7) nach einem der Ansprüche 6 bis 12 **dadurch gekennzeichnet, dass** die Vakuumkammer (1) Waschdüsen (22) und bevorzugt die Kondenswasseraufnahme (24) umfasst,

wobei die Waschdüsen (22) dazu geeignet sind, ein Waschmittel, insbesondere lebensmitteltaugliche Lauge und/oder Wasser, derart in der Vakuumkammer (1) zu verteilen, dass die Innenseiten eines Raumes der Vakuumkammer (1), welcher Lebensmittel (7) zur Kühlung aufnehmen kann, wenigstens teilweise mit dem Waschmittel, insbesondere der Lauge und/oder dem Wasser, benetzt werden können und

wobei die Kondenswasseraufnahme (24) bevorzugt dazu geeignet ist, das Waschmittel, insbesondere die Lauge und/oder das Wasser, welches durch die Waschdüsen (22) verteilt werden kann, aufzunehmen,

weiter sind bevorzugt die Waschdüsen (22) derart angeordnet und ausgestaltet, dass Bleche (8), welche in dem Raum der Vakuumkammer (1), welcher Lebensmittel (7) zur Kühlung aufnehmen kann, platziert werden, von dem Waschmittel, insbesondere von der Lauge und/oder dem Wasser, benetzt werden können.

14. Vakuumkühlvorrichtung für Lebensmittel nach einem der Ansprüche 6 bis 13, **dadurch gekennzeichnet, dass** die Vakuumkammer (1) eine Tür (28), einen Türrahmen, einen mit Druck beaufschlagbaren Dichtungsschlauch (29) und bevorzugt eine Türsteuerung (291) umfasst, wobei der mindestens eine Dichtungsschlauch (29) an der Tür (28) und/oder am Türrahmen angeordnet ist, insbesondere in einer Aufnahme (281, 271) für den mindestens einen Dichtungsschlauch (29), derart dass zwischen der Tür (28) und dem Türrahmen eine luftdichte Dichtung vorliegt, wenn der Dichtungsschlauch (29) in seinem Inneren einen festgelegten Überdruck hält und die Tür (28) geschlossen ist wobei bevorzugt die Türsteuerung (291) eine Steuereinheit umfasst, die ein Unter-Druck-Setzen des Dichtungsschlauches (29) veranlassen kann, und dies bevorzugt automatisch veranlasst, wenn die Tür (28) geschlossen ist.

15. Vakuumkühlvorrichtung für Lebensmittel (7) nach einem der Ansprüche 6 bis 14, **dadurch gekennzeichnet, dass** die Abpumpvorrichtung (3) eine ölfreie Vakuumpumpe und/oder einen Seitenkanalverdichter umfasst.

16. Vakuumkühlvorrichtung für Lebensmittel (7) nach einem der Ansprüche 6 bis 15, **dadurch gekenn-**

**zeichnet, dass** die Vakuumkühlvorrichtung weiter eine Rohstoffkühlung umfasst, wobei die Rohstoffkühlung eine trichterförmige Auslassöffnung umfasst, vakuumdicht verschliessbar ist und mindestens einen Anschluss für eine Verbindung mit der Abpumpvorrichtung umfasst, wobei der Anschluss es erlaubt, mit der Abpumpvorrichtung einen Unterdruck im Inneren der Rohstoffkühlung zu erzeugen und die Steuerung der Vakuumkühlvorrichtung oder eine Rohstoffkühlungssteuerung bevorzugt derart ausgebildet ist, dass der Unterdruck im Inneren der Rohstoffkühlung kontrolliert erzeugt werden kann.

**Claims**

1. Method for vacuum cooling food products (7), comprising the following steps:

   a) placing food products (7) in a vacuum chamber (1),
   b) specifying at least one atmospheric humidity and/or one dew point in an external region (2), in particular at an intended storage location for the food products (7),
   c) pumping out gases in the vacuum chamber (1) with the aid of a pumping-out device (3) in such a way that a pressure profile in the vacuum chamber (1) over time is controlled depending on the at least one atmospheric humidity and/or the at least one dew point of the external region (2).

2. Method for vacuum cooling food products (7) according to Claim 1, wherein the at least one atmospheric humidity and/or the at least one dew point of the external region (2), in particular of the intended storage location of the food products, are specified by manual input and/or by transfer of sensor data and/or by forecasting.

3. Method for vacuum cooling food products (7) according to either of Claims 1 and 2, wherein the pressure profile over time during pumping-out follows a setpoint pressure curve (16) and this is **characterized, in** particular, by the parameters amplitude (172) and frequency of vacuum pulsing and also of a pressure drop time (151b, c),
and values of one or more of these parameters depend on the atmospheric humidity and/or the dew point of the external region (2), in particular of the intended storage location and in particular also the type of food products (7),
wherein, in particular, the values of the frequency and amplitude (172) of the vacuum pulsing are determined at least also by the type of food products (7), and the value of the pressure drop time (151b, c) is at least also determined by the atmospheric humidity and/or the dew point of the external location (3), in particular of the intended storage location.

4. Method for vacuum cooling food products according to one of Claims 1 to 3, **characterized in that** two or more vacuum chambers (1a, b, c), which are connected to the same pumping-out device (3), are used in the following order:

a) a target negative pressure prevails in a first vacuum chamber (1a), during which a second vacuum chamber (1b) is charged with the food products (7) and closed in an air-tight manner,
b) the first vacuum chamber (1a) and the second vacuum chamber (1b) are connected to one another in such a way that pressure equalization takes place between the first and the second vacuum chamber (1a and 1b),
c) the first and the second vacuum chamber (1a and 1b) are separated from one another in such a way that there is no longer any pressure equalization between the first and the second vacuum chamber (1a and 1b),
d) the second vacuum chamber (1b) is connected to the pumping-out device (3) in such a way that the pressure in the second vacuum chamber (1b) is further reduced by the pumping-out device (3) until the target negative pressure is reached, while the first or a further vacuum chamber (1a or 1c) is once again charged with food products (7) and closed in an air-tight manner,
e) points b) to d) are repeated, wherein the second vacuum chamber (1b) replaces the first vacuum chamber (1a) and the first or further vacuum chamber (1a or 1c) replaces the second vacuum chamber (1b).

5. Method for vacuum cooling food products (7) according to Claims 1-4, **characterized in that** the pumping-out device (3) comprises a negative-pressure reservoir (21) and a vacuum pump generates a negative pressure in the said negative-pressure reservoir and, for the purpose of pumping out the vacuum chamber (1), the vacuum chamber (1) is connected to the negative-pressure reservoir (21), in particular to a controlled extent, so that, preferably at least partial, pressure equalization is established between the negative-pressure reservoir (21) and the vacuum chamber (1).

6. Vacuum-cooling device for food products (7), in particular baked goods, in particular for a method according to one of Claims 1 to 5, comprising a vacuum chamber (1), a pumping-out device (3), a controller (4) with which use of the pumping-out device (4) can be controlled, and a sensor (9) for atmospheric humidity and/or dew point in an external region (2), **characterized in that** the controller (4) is designed in such a way that a pumping-out process can be controlled depending on the atmospheric humidity and/or on the dew point of an external region (2), in particular an intended storage location of the food products (7), which atmospheric humidity and/or dew point are/is specified by transfer of sensor data.

7. Vacuum-cooling device according to Claim 6, wherein the device has a manual input device (11) and/or a read-in device for sensor data and/or an interface for receiving data, with which the atmospheric humidity and/or the dew point of the external region (2) can be supplied to the controller (4).

8. Vacuum-cooling device according to either of Claims 6 and 7, wherein the device further comprises a receptacle (24) for water of condensation.

9. Vacuum-cooling device according to one of Claims 6 to 8, wherein the device comprises a memory in which different setpoint pressure curves (16) for the controller at different atmospheric humidities and/or dew points of the external region (2), and in particular for the different types of food products (7), are stored and/or in which a program is stored, which program can determine the setpoint pressure curve (16) depending on at least one of the atmospheric humidities and/or dew points of the external region (2), and in particular depending on the type of food products (7).

10. Vacuum-cooling device according to one of Claims 6 to 9, **characterized in that** the pumping-out device (3) is connected to a plurality of vacuum chambers (1a, b, c) in such a way that a pressure in the different vacuum chambers (1a, b, c) can be regulated independently of one another, wherein the vacuum chambers (1a, b, c) are preferably connected to one another in such a way that negative-pressure equalization between two or more vacuum chambers (1a, b, c) is also possible.

11. Vacuum-cooling device for food products (7) according to one of Claims 6 to 10, which comprises one or more storage containers (25) which can be connected to the pumping-out device (3) independently of the vacuum chamber (1) and in which a negative pressure, in particular which can be generated by the pumping-out device (3), can be maintained independently of the pumping-out device (3), wherein the negative pressure is preferably a pressure of less than 500 mbar, particularly preferably of less than 200 mbar.

12. Vacuum-cooling device for food products (7) according to one of Claims 6 to 11, **characterized in that** it further has a receptacle for precursor dough (26), which receptacle comprises a precursor dough controller with which an internal temperature of the receptacle for precursor dough (26) can be adjusted depending on a measurement value of a pH value measurement device (2610), and wherein the receptacle for precursor dough (26) is designed as a vacuum chamber (1) and, in particular, is further suitable for maintaining the negative pressure which can be generated in it by the pumping-out device (3).

13. Vacuum-cooling device for food products (7) according to one of Claims 6 to 12, **characterized in that** the vacuum chamber (1) comprises wash nozzles (22) and preferably the receptacle (24) for water of condensation,
wherein the wash nozzles (22) are suitable for distributing a detergent, in particular food-grade washing solution and/or water, in the vacuum chamber (1) in such a way that the inner sides of a space in the vacuum chamber (1), which space can accommodate food products (7) to be cooled, can be at least partially wetted by the detergent, in particular the washing solution and/or the water, and
wherein the receptacle (24) for water of condensation is preferably suitable for receiving the detergent, in particular the washing solution and/or the water, which can be distributed by the wash nozzles (22), further preferably the wash nozzles (22) are arranged and configured in such a way that metal sheets (8) which are placed in the space in the vacuum chamber (1), which space can accommodate food products (7) to be cooled, can be wetted by the detergent, in particular by the washing solution and/or the water.

14. Vacuum-cooling device for food products according to one of Claims 6 to 13, **characterized in that** the vacuum chamber (1) comprises a door (28), a door frame, a sealing hose (29) to which pressure can be applied, and preferably a door controller (291), wherein
the at least one sealing hose (29) is arranged on the door (28) and/or on the door frame, in particular in a receptacle (281, 271) for the at least one sealing hose (29), in such a way that there is an air-tight seal between the door (28) and the door frame when the sealing hose (29) maintains a defined excess pressure in its interior and the door (28) is closed,
wherein the door controller (291) preferably comprises a control unit which can initiate pressurization of the sealing hose (29), and preferably initiates this automatically when the door (28) is closed.

15. Vacuum-cooling device for food products (7) according to one of Claims 6 to 14, **characterized in that** the pumping-out device (3) comprises an oil-free vacuum pump and/or a side-channel compressor.

16. Vacuum-cooling device for food products (7) according to one of Claims 6 to 15, **characterized in that** the vacuum-cooling device further comprises an arrangement for cooling raw materials, wherein the arrangement for cooling raw materials comprises a funnel-like outlet opening, can be closed in a vacuum-tight manner and comprises at least one connection for connection to the pumping-out device, wherein the connection allows a negative pressure to be generated in the interior of the arrangement for cooling raw materials by the pumping-out device and the controller of the vacuum-cooling device or an arrangement for cooling raw materials is preferably designed in such a way that the negative pressure can be generated in the interior of the arrangement for cooling raw materials in a controlled manner.

## Revendications

1. Procédé, destiné à refroidir sous vide des aliments (7), comprenant les étapes suivantes consistant à :

   a) placer des aliments (7) dans une chambre sous vide (1)
   b) indiquer au moins une humidité de l'air et/ou un point de rosée dans une zone externe (2), notamment dans un lieu de stockage prévu pour les aliments (7)
   c) pomper des gaz hors de la chambre sous vide (1) à l'aide d'un dispositif de pompage (3), de telle sorte qu'une courbe temporelle de pression dans la chambre sous vide (1) soit contrôlée en fonction de l'au moins une humidité de l'air et/ou de l'au moins un point de rosée de la zone externe (2).

2. Procédé, destiné à refroidir sous vide des aliments (7) selon la revendication 1, l'au moins une humidité de l'air et/ou l'au moins un point de rosée de la zone externe (2), notamment du lieu de stockage prévu des aliments étant indiqués par une saisie manuelle et/ou par un transfert de données de capteur et/ou par une prévision.

3. Procédé, destiné à refroidir sous vide des aliments (7) selon l'une quelconque des revendications 1 ou 2, la courbe temporelle de pression lors du pompage suivant une courbe de pression théorique (16) et celle-ci étant caractérisée notamment par les paramètres d'amplitude (172) et de fréquence d'une pulsation de vide, ainsi que d'un temps de chute de pression (151b, c) et des valeurs d'un ou de plusieurs desdits paramètres dépendant de l'humidité de l'air et/ou du point de rosée de la zone externe (2), notamment du lieu de stockage prévu et notamment aussi d'une nature des aliments (7), notamment les valeurs de la fréquence et de l'amplitude (172) de la pulsation de vide étant déterminées au moins également par la nature des aliments (7) et la valeur du temps de chute de pression (151b, c) étant déterminée au moins également par l'humidité de l'air et/ou par le point de rosée du lieu externe (3), notamment du lieu de stockage prévu.

4. Procédé, destiné à refroidir sous vide des aliments selon l'une quelconque des revendications 1 à 3, **caractérisé en ce que** deux chambres sous vide (la, b, c) ou plus qui sont reliées avec le même dispositif de pompage (3) sont utilisées selon la séquence suivante :

   a) dans une première chambre sous vide (1a) règne une dépression ciblée, alors que pendant ce temps, une deuxième chambre sous vide (1b) est chargée avec les aliments (7) et fermée de manière étanche à l'air,
   b) la première chambre sous vide (1a) et la deuxième chambre sous vide (1b) sont reliées l'une à l'autre de telle sorte qu'une compensation de pression ait lieu entre la première et la deuxième chambre sous vide (1a et 1b),
   c) la première et la deuxième chambre sous vide (1a et 1b) sont séparées l'une de l'autre de telle sorte qu'il n'existe plus aucune compensation de pression entre la première et la deuxième chambre sous vide (1a et 1b),
   d) la deuxième chambre sous vide (1b) est reliée avec le dispositif de pompage (3) de telle sorte que par le dispositif de pompage (3), la pression dans la deuxième chambre sous vide (1b) continue de baisser jusqu'à l'atteinte de la dépression ciblée, pendant que la première ou une autre chambre sous vide (1a ou 1c) est à nouveau chargée avec des aliments (7) et fermée de manière étanche à l'air,
   e) les étapes b) à d) sont répétées, la deuxième chambre sous vide (1b) prenant la place de la première chambre sous vide (1a) et la première ou l'autre chambre sous vide (1a ou 1c) prenant la place de la deuxième chambre sous vide (1b).

5. Procédé, destiné à refroidir sous vide des aliments (7) selon la revendication 1 à 4, **caractérisé en ce que** le dispositif de pompage (3) comprend un accumulateur de dépression (21) et **en ce que** dans ce dernier, une pompe à vide génère une dépression et pour le pompage de la chambre sous vide (1), on relie la chambre sous vide (1) avec l'accumulateur de dépression (21), notamment dans une mesure contrôlée, de sorte à établir une compensation de pression pour le moins partielle entre l'accumulateur de dépression (21) et la chambre sous vide (1).

6. Dispositif de refroidissement sous vide d'aliments (7), notamment d'aliments de boulangerie, notamment destiné à un procédé selon l'une quelconque des revendications 1 à 5, comprenant une chambre sous vide (1), un dispositif de pompage (3), un système de commande (4) permettant de commander une utilisation du dispositif de pompage (4) et un capteur (9) de l'humidité de l'air et/ou du point de rosée dans une zone externe (2), **caractérisé en ce que** le système de commande (4) est conçu de telle sorte qu'un processus de pompage puisse être commandé en fonction de l'humidité de l'air et/ou du point de rosée d'une zone externe (2), notamment d'un lieu de stockage prévu des aliments (7), qui est indiquée et/ou indiqué par un transfert de données de capteur.

7. Dispositif de refroidissement sous vide selon la revendication 6, le dispositif comportant un dispositif de saisie (11) manuelle et/ou un dispositif de lecture de données de capteur et/ou une interface destinée à réceptionner des données, permettant de mettre à disposition l'humidité de l'air et/ou le point de rosée de la zone externe (2) pour le système de commande (4).

8. Dispositif de refroidissement sous vide selon l'une quelconque des revendications 6 ou 7, le dispositif comprenant par ailleurs un réceptacle d'eau de condensation (24).

9. Dispositif de refroidissement sous vide selon l'une quelconque des revendications 6 à 8, le dispositif comprenant une mémoire dans laquelle sont sauvegardées différentes courbes de pression théoriques (16) pour le système de commande à différentes humidités de l'air et/ou à différents points de rosée de la zone externe (2), et notamment pour les différentes natures d'aliments (7), et/ou dans laquelle est sauvegardé un programme, qui en fonction d'au moins l'une des humidités de l'air et/ou l'un des points de rosée de la zone externe (2), et notamment en fonction de la nature des aliments (7), peut déterminer la courbe de pression théorique (16).

10. Dispositif de refroidissement sous vide selon l'une quelconque des revendications 6 à 9, **caractérisé en ce que** le dispositif de pompage (3) est raccordé à plusieurs chambres sous vide (la, b, c) de telle sorte qu'une pression dans les différentes chambres sous vide (la, b, c) soit réglable indépendamment des autres, de préférence les chambres sous vide (la, b, c) étant reliées entre elles de telle sorte qu'également une compensation de dépression soit possible entre deux chambres sous vide (la, b, c) ou plus.

11. Dispositif de refroidissement sous vide d'aliments (7) selon l'une quelconque des revendications 6 à 10, qui comprend un ou plusieurs conteneurs de stockage (25) qui peuvent être raccordés indépendamment de la chambre sous vide (1) sur le dispositif de pompage (3) et dans lesquels une dépression susceptible d'être générée notamment par le dispositif de pompage (3) peut être maintenue indépendamment du dispositif de pompage (3), s'agissant de préférence en ce qui concerne la dépression d'une pression inférieure à 500 mbar, de manière particulièrement préférentielle, inférieure à 200 mbar.

12. Dispositif de refroidissement sous vide d'aliments (7) selon l'une quelconque des revendications 6 à 11, **caractérisé en ce qu'**il comporte par ailleurs un réceptacle pour levain (26) qui comprend un système de commande du levain, permettant de régler une température intérieure du réceptacle pour levain (26) en fonction d'une valeur mesurée par un dispositif de mesure de la valeur pH (2610), et le réceptacle pour levain (26) étant conçu sous la forme d'une chambre sous vide (1) et étant notamment apte par ailleurs à maintenir la dépression laquelle est susceptible d'être générée dans celui-ci par le dispositif de pompage (3).

13. Dispositif de refroidissement sous vide d'aliments (7) selon l'une quelconque des revendications 6 à 12, **caractérisé en ce que** la chambre sous vide (1) comprend des buses de lavage (22) et de préférence le réceptacle d'eau de condensation (24), les buses de lavage (22) étant aptes à distribuer un produit de lavage, notamment une lessive pour contact alimentaire et/ou de l'eau dans la chambre sous vide (1) de telle sorte que les faces internes d'un espace de la chambre sous vide (1) qui est susceptible de recevoir des aliments (7) pour leur refroidissement puissent être humidifiées au moins en partie avec le produit de lavage, notamment la lessive et/ou l'eau et le réceptacle d'eau de condensation (24) étant de préférence apte à recevoir le produit de lavage, notamment la lessive et/ou l'eau, qui peut être distribué par les buses de lavage (22), par ailleurs, les buses de lavage (22) étant de préférence placées et conçues de telle sorte que des tôles (8), qui sont placées dans l'espace de la chambre sous vide (1) susceptible de recevoir des aliments (7) pour le refroidissement puissent être humidifiées par le produit de lavage, notamment par la lessive et/ou par l'eau.

14. Dispositif de refroidissement sous vide d'aliments selon l'une quelconque des revendications 6 à 13, **caractérisé en ce que** la chambre sous vide (1) comprend une porte (28), un encadrement de porte, un flexible d'étanchéité (29) susceptible d'être soumis à une pression et de préférence un système de commande de porte (291), l'au moins un flexible d'étanchéité (29) étant placé sur la porte (28) et/ou sur l'encadrement de porte, notamment dans un logement (281, 271) pour l'au moins un flexible d'étanchéité (29), de telle sorte qu'entre la porte (28) et l'encadrement de porte se trouve un joint étanche à l'air, lorsque le flexible d'étanchéité (29) maintient en son intérieur une surpression fixée et la porte (28) est fermée et de préférence le système de commande de porte (291) comprenant une unité de commande, susceptible de provoquer une mise sous dépression du flexible d'étanchéité (29) et la provoquant de préférence de manière automatique lorsque la porte (28) est fermée.

15. Dispositif de refroidissement sous vide d'aliments (7) selon l'une quelconque des revendications 6 à 14, **caractérisé en ce que** le dispositif de pompage (3) comprend une pompe à vide sans huile et/ou un compresseur à canal latéral.

16. Dispositif de refroidissement sous vide d'aliments (7) selon l'une quelconque des revendications 6 à 15, **caractérisé en ce que** le dispositif de refroidissement sous vide comprend par ailleurs un refroidissement de matière première, le refroidissement de matière première comprenant une ouverture de sortie en forme de trémie, étant susceptible d'être fermé de manière étanche au vide et comprenant au moins un raccordement pour une liaison avec le dispositif de pompage, le raccordement permettant de générer avec le dispositif de pompage une dépression à l'intérieur du refroidissement de matière première et le système de commande du dispositif de refroidissement sous vide ou un système de commande du refroidissement de matière première étant conçu de préférence de telle sorte que la dépression à l'intérieur du refroidissement de matière première puisse être générée sous contrôle.

# Fig. 1

# Fig. 2a

# Fig. 2b

# Fig. 3

**Fig. 4**

**Fig. 5**

**Fig. 6**

**Fig. 7**

**Fig. 8**

# Fig. 9

# Fig. 10a

# Fig. 10b

# Fig. 10c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2832242 A1, Ulrich Giger
- CH 706933 A1
- WO 2012082060 A1